# EUROPEAN PATENT APPLICATION

(11) **EP 4 568 152 A1**
(43) Date of publication of application: **11.06.2025**
(21) Application number: 22953664.4
(22) Date of filing: 05.08.2022
(51) Int. Cl.: H04L 5/00

(54) **UPLINK DATA SENDING APPARATUS AND METHOD, AND UPLINK DATA RECEIVING APPARATUS AND METHOD**

(71) Applicant: FUJITSU LIMITED, Kawasaki-shi, Kanagawa 211-8588 (JP)
(72) Inventor: ZHANG, Jian, Beijing 100022 (CN); SUN, Gang, Beijing 100022 (CN); WANG, Xin, Beijing 100022 (CN)
(74) Representative: Haseltine Lake Kempner LLP
(86) International application number: PCT/CN2022/110660
(87) International publication number: WO 2024/026859

(57) **Abstract**

Embodiments of this disclosure provide an uplink data transmitting device and method, and an uplink data receiving device and method. The uplink data transmitting method is applied to a terminal equipment, wherein the terminal equipment is configured with a first SRS resource set and a second SRS resource set. The method includes: receiving, by a terminal equipment, downlink control information, determining a layer number and a DMRS port according to the downlink control information, and transmitting uplink data in a first transmission scheme or a second transmission scheme. Thus, the terminal equipment determines the layer number and the DMRS port according to received downlink control information, and transmits the uplink data in a specific transmission scheme. Thus, parameters, such as the layer number and the DMRS port, can be flexibly indicated, and dynamic switching among different transmission schemes can be supported; and the terminal equipment can transmit the uplink data using appropriate uplink transmission parameters, thereby ensuring the throughput or reliability of uplink data transmission.

## Description

### Technical Field

Embodiments of this disclosure relate to the field of communication technologies.

### Background

The 3GPP standard organization performed standardization-related operations on unified transmission configuration indication (TCI) in the standardization process of release 17 (Rel-17). The unified TCI in Rel-17 was primarily designed for a single transmission and reception point (sTRP) scenario.

Multiple transmission and reception points (mTRP) have become an important scenario for a 5G NR system with the advancement of standardization operations, and can achieve a purpose of increasing throughput or improving reliability through mTRP-based transmission.

In previous standardization operations, an mTRP-based transmission of a physical downlink shared channel (PDSCH) was standardized in Rel-16; an mTRP-based transmission of a physical downlink control channel (PDCCH), an mTRP-based transmission of a physical uplink shared channel (PUSCH), and an mTRP-based transmission of a physical uplink control channel (PUCCH) were standardized in Rel-17, in which the mTRP-based transmission included an mTRP transmission based on a single downlink control information (sDCI) and an mTRP transmission based on multiple DCIs (mDCI).

It should be noted that the above introduction to the background is merely provided for clear and complete explanation of the technical solutions of this disclosure and for easy understanding by those skilled in the art. And it should not be understood that these technical solutions are known to those skilled in the art simply because they are described in the background of this disclosure.

### Summary

In a scenario where the unified TCI in Rel-17 targets a single transmission and reception point (sTRP), a network device configures M (M≥1) TCI states for a terminal equipment using RRC signaling, and activates N (1 ≤ N ≤ M) TCI states among the M TCI states using a medium access control (MAC) control element (CE), and indicates L (1≤ L ≤ N) TCI states among the N TCI states using downlink control information (DCI). The transmission configuration indication (TCI) field in a DCI format 1_1 or DCI format 1_2 indicates one or more TCI states. In addition, the DCI format 1_1 or DCI format 1_2 may schedule downlink data, known as DCI format 1_1/1_2 with DL assignment, or may not schedule downlink data, known as DCI format 1_1/1_2 without DL assignment.

A TCI state (referred to as TCI) may include or correspond to one or two source reference signals (source RS). The source reference signal may provide quasi co-location (QCL) information for downlink reception, and may be known as a downlink source reference signal. The source reference signal may provide a reference for an uplink transmission spatial filter (UL TX spatial filter), and may be known as an uplink source reference signal. The source reference signal may provide beam information for a destination channel/signal. For example, a beam used by the terminal equipment to receive the destination channel/signal is the same as a beam used to receive the downlink source reference signal. For another example, a beam used by the terminal equipment to transmit the destination channel/signal is the same as a beam used to transmit the uplink source reference signal. For another example, a beam used by the terminal equipment to transmit the destination channel/signal has reciprocity with a beam used to receive the downlink source reference signal, that is, the beams in opposite directions are used.

Therefore, an indication or update of the TCI state actually includes an indication or update of a beam used by the terminal equipment. The TCI state includes: a joint TCI state, a downlink TCI state and an uplink TCI state. The source reference signal included in the downlink TCI state is the downlink source reference signal, the source reference signal included in the uplink TCI state is the uplink source reference signal, and the source reference signal included in the joint TCI state is both the downlink source reference signal and the uplink source reference signal. The joint TCI state acts on both a downlink beam (receiving beam) and an uplink beam (transmitting beam). In other words, the downlink beam and the uplink beam use a same beam, but have opposite beam directions, that is, there exists reciprocity between the uplink and downlink beams. The downlink TCI state only affects the downlink beam. The uplink TCI state only affects the uplink beam. The uplink beam is also known as the uplink transmission spatial filter. A TCI field may indicate the joint TCI state (joint DL/UL TCI), or the TCI field may indicate the downlink TCI state and/or the uplink TCI state (separate DL/UL TCI). These two modes may be configured by RRC signaling. For the unified TCI in Rel-17, a TCI field indicates a joint TCI state, or indicates a downlink TCI state, or indicates an uplink TCI state, or indicates a downlink TCI state and an uplink TCI state.

Multiple transmission and reception point (mTRP) is an important scenario of a 5G NR system, and can achieve the purpose of increasing throughput or improving reliability through mTRP-based transmission. An mTRP-based transmission of a PDSCH is standardized in Rel-16, and an mTRP-based transmission of a PDCCH, a PUSCH and a PUCCH is standardized in Rel-17. In addition, the mTRP-based transmission in the current Rel-17 includes an mTRP transmission based on a single DCI (sDCI) and an mTRP transmission based on multiple DCIs (mDCI). For sDCI mTRP, a DCI schedules uplink and downlink transmissions of two TRPs, which is more suitable for a situation where backhaul between TRPs is ideal; for mDCI mTRP, two DCIs are used for two TRPs to schedule uplink and downlink transmissions of respective TRP, respectively, which is more suitable for a situation where the backhaul between the TRPs is not ideal.

However, the inventor discovered that for Rel-17, the terminal equipment only uses one panel for each uplink transmission. Therefore, even if the terminal equipment has a plurality of panels, the Rel-17 does not support the terminal equipment using a plurality of panels for simultaneous uplink transmission. At present, the standardization of Rel-18 has not yet officially started. However, a multi-panel uplink transmission has been determined as one of project proposals for the Rel-18. In other words, based on a framework of the unified TCI and the mTRP scenario mentioned above, the Rel-18 performs research and standardization on a simultaneous multi-panel UL transmission (STxMP) scheme for the terminal equipment.

For the STxMP scheme, such scheme may include different specific transmission schemes. In the sDCI mTRP scenario, one DCI needs to indicate a layer number, a pre-coding matrix and a DMRS port used by a plurality of panels, that is, to indicate a layer number, a pre-coding matrix and a DMRS port used for multiple transmissions. Although one DCI can indicate the layer number and the pre-coding matrix used for multiple transmissions in an mTRP PUSCH scheme based on time division multiplexing in the Rel-17, this indication is limited to such an assumption that a same layer number is used for the multiple transmissions, and the DMRS port used for the multiple transmissions is the same. However, for part of transmission schemes in the STxMP scheme, the multiple transmissions from the plurality of panels may use different layer numbers and use different DMRS ports. Therefore, the indication method in the mTRP scheme in the Rel-17 cannot be directly reusable in the STxMP scheme in the Rel-18.

Therefore, how to indicate parameters such as the layer number, pre-coding matrix, and DMRS port for a specific transmission scheme in the STxMP scheme is still an open-ended problem.

To address at least one of the above problems, embodiments of this disclosure provide an uplink data transmitting device and method, and an uplink data receiving device and method. The terminal equipment determines a layer number and a DMRS port according to received downlink control information, and transmits uplink data in a specific transmission scheme. Thus, parameters, such as the layer number and the DMRS port, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

According to an aspect of the embodiments of this disclosure, there is provided an uplink data transmitting method, applied to a terminal equipment, wherein the terminal equipment is configured with a first SRS resource set and a second SRS resource set. The method includes:
receiving, by the terminal equipment, downlink control information,
determining a layer number and a DMRS port according to the downlink control information, and transmitting uplink data in a first transmission scheme or a second transmission scheme.

According to another aspect of the embodiments of this disclosure, there is provided an uplink data receiving method, applied to a network device. The method includes:
transmitting, by the network device, downlink control information,
receiving, by the network device, uplink data transmitted in a first transmission scheme or a second transmission scheme;
in which a terminal equipment determines a layer number and a DMRS port according to the downlink control information, and transmits the uplink data in the first transmission scheme or the second transmission scheme, and in which the terminal equipment is configured with a first SRS resource set and a second SRS resource set.

According to another aspect of the embodiments of this disclosure, there is provided an uplink data transmitting device, configured in a terminal equipment, wherein the terminal equipment is configured with a first SRS resource set and a second SRS resource set, the uplink data transmitting device includes:
a receiving unit configured to receive downlink control information, and
a transmitting unit configured to determine a layer number and a DMRS port according to the downlink control information, and transmit uplink data in a first transmission scheme or a second transmission scheme.

According to another aspect of the embodiments of this disclosure, there is provided an uplink data receiving device, configured in a network device. The uplink data receiving device includes:
a transmitting unit configured to transmit downlink control information,
a receiving unit configured to receive uplink data transmitted in a first transmission scheme or a second transmission scheme;
in which a terminal equipment determines a layer number and a DMRS port according to the downlink control information, and transmits the uplink data in the first transmission scheme or the second transmission scheme, and in which the terminal equipment is configured with a first SRS resource set and a second SRS resource set.

One of the advantageous effects of the embodiments of this disclosure is that the terminal equipment determines the layer number and the DMRS port according to the received downlink control information, and transmits uplink data in a specific transmission scheme. Thus, parameters, such as the layer number and the DMRS port, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

With reference to the following description and drawings, the particular embodiments of this disclosure are disclosed in detail, and the manners in which the principle of this disclosure can be used are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in a same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, or components.

### Brief Description of the Drawings

Elements and features depicted in one drawing or embodiment of this disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram illustrating a communication system according to an embodiment of this disclosure;
FIG. 2 is a schematic diagram illustrating an uplink data transmitting method according to an embodiment of this disclosure;
FIG. 3 is an example diagram of determining a layer number and a DMRS port according to an embodiment of this disclosure;
FIG. 4 is another example diagram of determining a layer number and a DMRS port according to an embodiment of this disclosure;
FIG. 5 is another example diagram of determining a layer number and a DMRS port according to an embodiment of this disclosure;
FIG. 6 is another example diagram of determining a layer number and a DMRS port according to an embodiment of this disclosure;
FIG. 7 is another example diagram of determining a layer number and a DMRS port according to an embodiment of this disclosure;
FIG. 8 is another example diagram of determining a layer number and a DMRS port according to an embodiment of this disclosure;
FIG. 9 is a schematic diagram illustrating an uplink data receiving method according to an embodiment of this disclosure;
FIG. 10 is a schematic diagram illustrating an uplink data transmitting device according to an embodiment of this disclosure;
FIG. 11 is a schematic diagram illustrating an uplink data receiving device according to an embodiment of this disclosure;
FIG. 12 is a schematic diagram illustrating a composition of a network device according to an embodiment of this disclosure; and
FIG. 13 is a schematic diagram illustrating a terminal equipment according to an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division a plurality of access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and New Radio (NR) in the future, etc., and/or other communication protocols that are currently known or will be developed in the future.

In the embodiments of this disclosure, the term "network device", for example, refers to a device in a communication system that accesses terminal equipment to the communication network and provides services for the terminal equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, equipment accessing to a communication network and receiving network services via a network device. The terminal equipment may be fixed or mobile, and may also be referred to as a mobile station (MS), a terminal, a subscriber station (SS), an access terminal (AT), and a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal device may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipment described above. "A device" in this text may refer to a network device, and may also refer to a terminal equipment, except otherwise specified.

A scenario of an embodiment in this disclosure shall be described below by way of examples; however, this disclosure is not limited thereto.

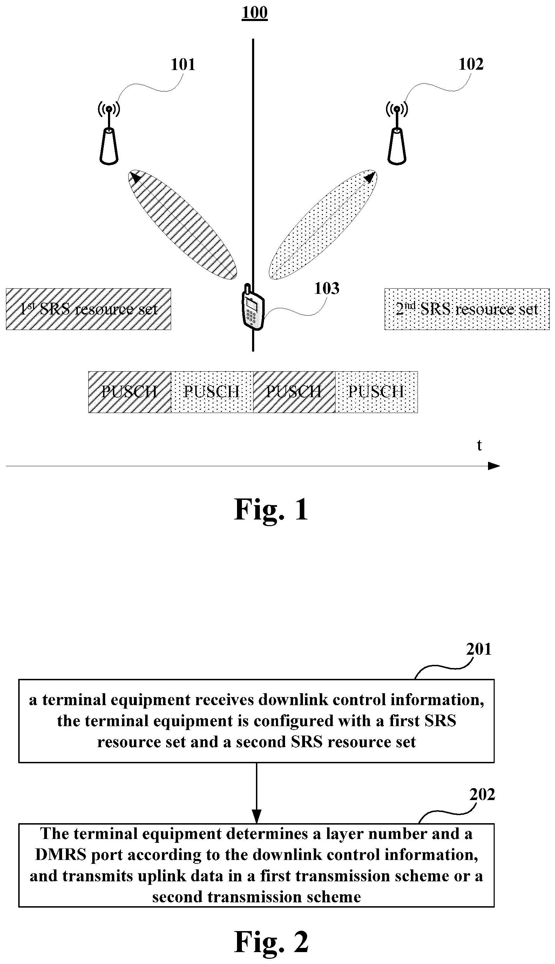

FIG. 1 is a schematic diagram illustrating a communication system according to an embodiment of this disclosure, which schematically illustrates a situation in which a terminal equipment and a network device are used as an example. As illustrated in FIG. 1, a communication system 100 may include a first TRP101, a second TRP102, and a terminal equipment 103, in which the first TRP101 and the second TRP102 may be network devices. For simplicity, FIG. 1 only illustrates two network devices and one terminal equipment as an example; however, this disclosure is not limited thereto.

In an embodiment of this disclosure, existing services or services that may be implemented in the future may be transmitted between the first TRP101, the second TRP102 and the terminal equipment 103. For example, these services may include but are not limited to: an enhanced Mobile Broadband (eMBB), a massive Machine Type Communication (mMTC) and an Ultra-Reliable and Low Latency Communication (URLLC), etc.

An mTRP-based transmission of a PDSCH is standardized in Rel-16, and mTRP-based transmissions of a PDCCH, a PUSCH and a PUCCH are standardized in Rel-17. The mTRP-based transmission includes an mTRP transmission based on a single DCI (sDCI) and an mTRP transmission based on multiple DCIs (mDCI). For sDCI mTRP, one DCI schedules uplink and downlink transmissions of two TRPs, which is more suitable for a situation where backhaul between TRPs is ideal. For mDCI mTRP, two DCIs are used for two TRPs to schedule uplink and downlink transmissions of respective TRP, respectively, which is more suitable for a situation where the backhaul between the TRPs is not ideal.

Taking the terminal equipment 103 transmitting the PUSCH in the mTRP scenario as an example, as illustrated in FIG. 1, the terminal equipment 103 transmits the PUSCH in a manner of PUSCH repetition, e.g., transmits to the first TRP101 in a time slot 1, transmits to the second TRP102 in a time slot 2, and so on.

In the mTRP scenario, the terminal equipment is configured with two SRS resource sets corresponding to two TRPs, respectively. For example, the terminal equipment is configured with two SRS resource sets. For example, the terminal equipment 103 is configured with the first SRS resource set (1^{st} SRS resource set) corresponding to the first TRP 101; and configured with the second SRS resource set (2^{nd} SRS resource set) corresponding to the second TRP 102.

Due to a difference in geographical location between the first TRP101 and the second TRP102, the terminal equipment may transmit the PUSCH to the first TRP101 and/or the second TRP102 based on different transmission parameters such as a pre-coding matrix, an SRS resource indicator (SRI), and a power control parameter. In addition, the terminal equipment obtains transmission parameters for the first TRP101 and the second TRP102 based on the first SRS resource set and the second SRS resource set.

Taking the transmission parameter being the SRS resource indicator (SRI) as an example, for a dynamic uplink grant (dynamic UL grant), two SRI fields in the DCI indicate SRS resources in the two SRS resource sets, respectively; and for a configured grant, two SRIs are configured by RRC to the two SRS resource sets. Therefore, the terminal equipment needs to know a mapping relationship between the PUSCH repetition and the SRS resource set, i.e., needs to know on which SRS resource set the transmission of each PUSCH repetition should be based.

However, the Rel-18 performs research and standardization operations on the simultaneous multi-panel UL transmission (STxMP) scheme for the terminal equipment. For example, in the sDCI mTRP scenario, one DCI may need to indicate a layer number, a pre-coding matrix and a DMRS port used by multiple panels. That is, one DCI indicates a layer number, a pre-coding matrix and a DMRS port used for multiple transmissions. Although one DCI can indicate the layer number and the pre-coding matrix used for multiple transmissions in an mTRP PUSCH scheme based on time division multiplexing in the Rel-17, this indication is limited to such an assumption that a same layer number is used for multiple transmissions, and the DMRS port used for the multiple transmissions is the same. However, for part of transmission schemes in the STxMP scheme, the multiple transmissions from the multiple panels may use different layer numbers and use different DMRS ports. Therefore, the indication method in the mTRP scheme in the Rel-17 cannot be directly reusable in the STxMP scheme in the Rel-18.

To address at least one of the above problems, embodiments of this disclosure provide an uplink data transmitting device and method, and an uplink data receiving device and method.

### Embodiments of a first aspect

The embodiments of this disclosure provide an uplink data transmitting method, applied to a terminal equipment. The terminal equipment is configured with a first SRS resource set and a second SRS resource set.

FIG. 2 is a schematic diagram illustrating an uplink data transmitting method according to an embodiment of this disclosure. As illustrated in FIG. 2, the method includes:
201: a terminal equipment receives downlink control information, and
202: the terminal equipment determines a layer number and a DMRS port according to the downlink control information, and transmits uplink data in a first transmission scheme or a second transmission scheme.

It is worth noting that the FIG. 2 only schematically illustrates an embodiment of this disclosure, taking a terminal equipment as an example, however, this disclosure is not limited thereto. For example, an order of execution of the operations may be appropriately adjusted, and furthermore, some other operations may be added, or some operations therein may be reduced. In addition, the objects of the operations can also be adjusted. And appropriate variants may be made by those skilled in the art according to the above content, without being limited to what is contained in FIG. 2.

In some embodiments, the terms "TRP" and "SRS resource set" may be used interchangeably. The terms "TRP" and "CSI-RS resource set" may be used interchangeably. The wordings "corresponding", "associated" and "comprising" may be used interchangeably. The terms "uplink TCI state" and "joint TCI state" may be used interchangeably. The terms "PUSCH", "PUSCH transmission" and "PUSCH transport" may be used interchangeably. "TPMI" refers to information indicated by a "precoding information and number of layers" field or a "second precoding information" field in DCI, including information on the pre-coding matrix and information on the layer number. The fields may be referred to as "TPMI fields". The above disclosure only illustrates the embodiments. However, the embodiments of this disclosure are not limited thereto.

Therefore, the terminal equipment determines a layer number and a DMRS port according to the received downlink control information, and transmits uplink data in a specific transmission scheme. Thus, parameters, such as the layer number and the DMRS port, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

In some embodiments, the first transmission scheme includes an SDM scheme; and the second transmission scheme includes one of an sTRP scheme, an mTRP scheme, a FDM scheme, or an SFN scheme.

For example, the STxMP scheme in the Rel-18 may include one of a space division multiplexing (SDM) scheme, a frequency division multiplexing (FDM) scheme, or a single-frequency network (SFN) scheme.

For example, for the SDM scheme, the scheme refers to that at least two panels transmit different layers simultaneously on a same time-frequency resource. For example, a panel 1 transmits a layer 1 and a layer 2, and a panel 2 transmits a layer 3. For the FDM scheme, the scheme refers to that at least two panels transmit two different parts of one PUSCH, or two PUSCH repetitions of the PUSCH simultaneously on different frequency resources. For the SFN scheme, the scheme refers to that at least two panels transmit same data simultaneously on a same time-frequency resource.

For example, the sTRP scheme and the mTRP scheme in the embodiments of this disclosure refer to the sTRP PUSCH transmission scheme and the mTRP PUSCH transmission scheme in the Rel-17, and will not be repeatedly described here.

In some embodiments, downlink control information may also be referred to as uplink grant (UL grant) or downlink control information for scheduling uplink (UL DCI). The downlink control information may include multiple fields, for example, a first field and a second field, in which the first field includes a first indication field and/or a second indication field.

For example, the first indication field indicates transmission parameters of a first panel or a first SRS resource set; and/or the second indication field indicates transmission parameters of a second panel or a second SRS resource set.

In some embodiments, the first indication field is a first uplink transmit precoding matrix indicator (TPMI) field or a first SRS resource indicator (SRI) field, and/or the second indication field is a second uplink transmit precoding matrix indicator (TPMI) field or a second SRS resource indicator (SRI) field; and the second field is an antenna ports field.

In some embodiments, in a case where codebook based uplink data is transmitted, the first indication field is a first TPMI field, and/or the second indication field is a second TPMI field; and in a case where non-codebook based uplink data is transmitted, the first indication field is a first SRI field, and/or the second indication field is a second SRI field. For example, a difference between a codebook based PUSCH transmission and a non-codebook based PUSCH transmission is that for the non-codebook based PUSCH transmission, the TPMI does not need to be indicated and may also be expressed as an absence of the TPMI field in the downlink control information. The transmission of codebook based uplink data and non-codebook based uplink data will be separately demonstrated in examples below.

In some embodiments, in a case where uplink data is transmitted in the first transmission scheme, the first layer number is determined according to the first indication field, and the second layer number is determined according to the second indication field, in which the first layer number and the second layer number are identical, or, the first layer number and the second layer number are different; and the DMRS port is determined according to a sum of the first layer number and the second layer number and the second field. Examples of transmitting codebook based uplink data and non-codebook based uplink data are respectively provided below.

A description is given below by taking a codebook based PUSCH transmission as an example.

In some embodiments, a bit width of the second indication field is equal to a maximum bit width of the second indication field in the first transmission scheme and the second transmission scheme; the bit width of the second indication field in the first transmission scheme is greater than or equal to the bit width of the second indication field in the second transmission scheme; the bit width of the second indication field is equal to the bit width of the first indication field.

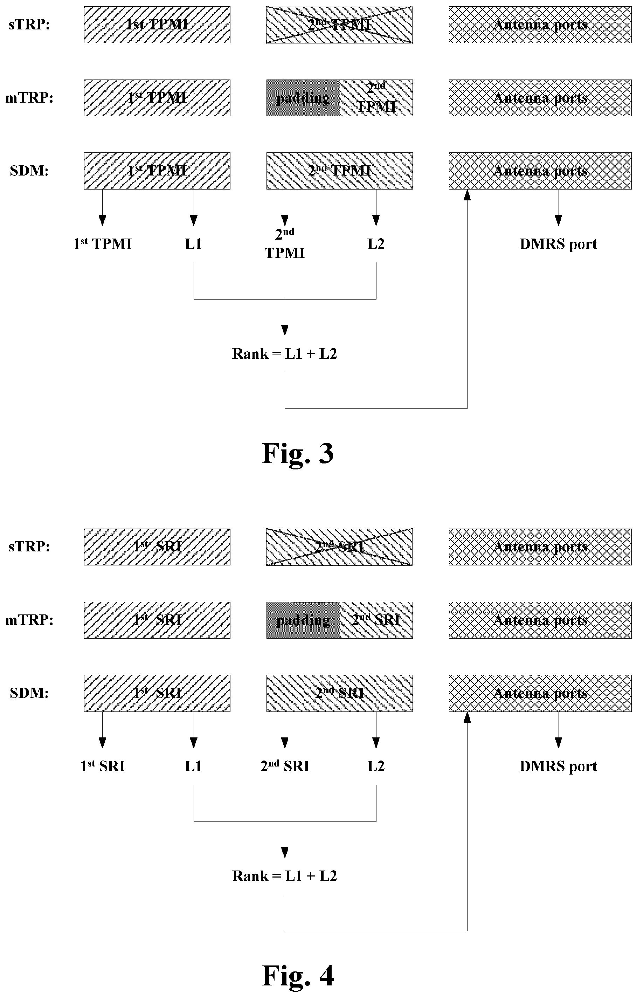

FIG. 3 is an example diagram of determining a layer number and a DMRS port according to an embodiment of this disclosure. For example, the first indication field is the first TPMI field, the second indication field is the second TPMI field, and the second field is an antenna ports field. For example, the first transmission scheme is the SDM scheme, and the second transmission scheme includes one of an sTRP scheme, an mTRP scheme, a FDM scheme, or an SFN scheme. FIG. 3 takes the sTRP scheme and the mTRP scheme as examples.

As illustrated in FIG. 3, the first TPMI and the first layer number (L1) are determined according to the first TPMI field of the DCI, the second TPMI and the second layer number (L1) are determined according to the second TPMI field of the DCI, and the bit width of the second TPMI field is determined according to the maximum bit width required for more than one scheme, and the DMRS port is determined according to the sum of L1 and L2 and the antenna ports field.

FIG. 3 schematically illustrates this. For the SDM scheme, the first TPMI and the first layer number (L1) are indicated by the first TPMI field of the DCI, and the second TPMI and the second layer number (L2) are indicated by the second TPMI field of the DCI, which can also be expressed as the information being independently indicated by the two TPMI fields, thus the bit width of the second TPMI field is equal to the bit width of the first TPMI field. As illustrated in FIG. 3, for the mTRP scheme, in view of such a limitation as L2 = L1, that is, the second TPMI is indicated under the condition that L2 is known, thus the second TPMI field does not need to indicate L2-related information. The bit width of the second TPMI field may be less than the bit width of the first TPMI field. In addition, for the sTRP scheme, there is no need to indicate the second TPMI, and therefore, the second TPMI field is reserved, that is, not used.

Therefore, in order to support dynamic switching among the SDM scheme, the sTRP scheme and the mTRP scheme, the bit width of the field in the DCI is guaranteed to be the same for the SDM scheme, the sTRP scheme and the mTRP scheme as needed. That is, the bit width of the second TPMI field needs to be determined based on the maximum bit width among the three schemes. For example, as illustrated in FIG. 3, the bit width of the second TPMI field, i.e., the bit width of the second TPMI field of the SDM scheme, is also equal to the bit width of the first TPMI field. For a specific transmission scheme, in a case where the bit width actually used is less than the bit width of the second TPMI field determined above (such as the mTRP scheme), the bit width actually used is padded with bits, so as to be equal to the bit width of the second TPMI field determined above.

A method of determining a bit width of a first TPMI field and a second TPMI field is described in the following examples.

In some embodiments, the first layer number (L1) and the second layer number (L2) are determined according to the first TPMI field and the second TPMI field of the DCI, respectively.

For example, for the SDM scheme, the first TPMI and the first layer number (L1) are determined according to the first TPMI field, in which the bit width (number of bits) and meaning of the first TPMI field are shown in Table 1 (also known as "Table 7.3.1.1.2-2") below; and the second TPMI and the second layer number (L2) are determined according to the second TPMI field. The bit width and meaning of the second TPMI field are also shown in Table 1 (also known as "Table 7.3.1.1.2-2") below.

In addition, a tuple consisting of the first layer number and the second layer number can be expressed as (L1, L2). Values of the tuple satisfy the following conditions: the tuple is one of (1, 1), (1, 2), (2,1), (2,2).

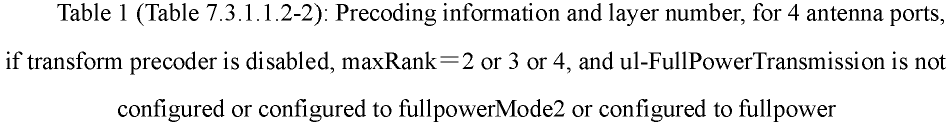

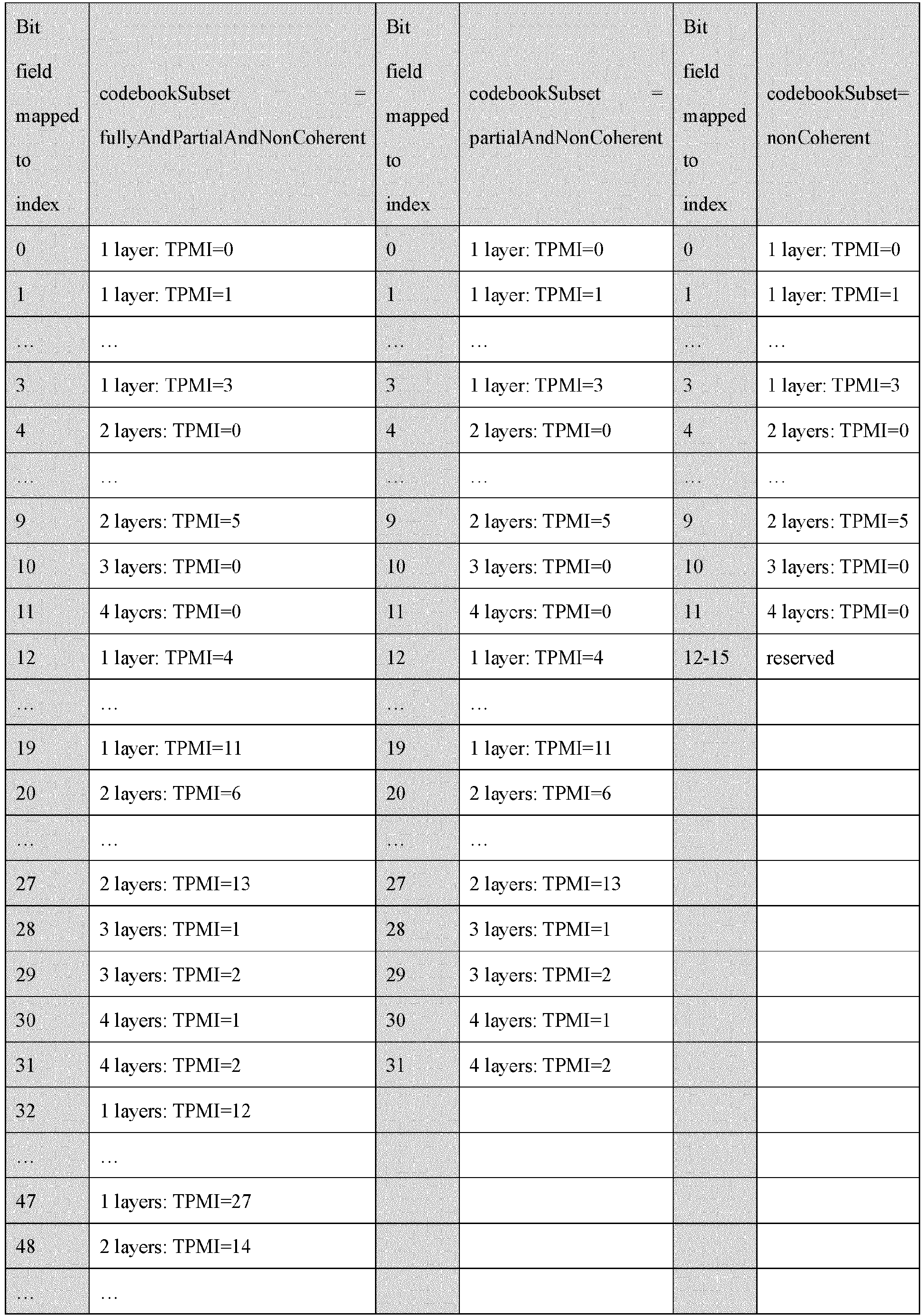

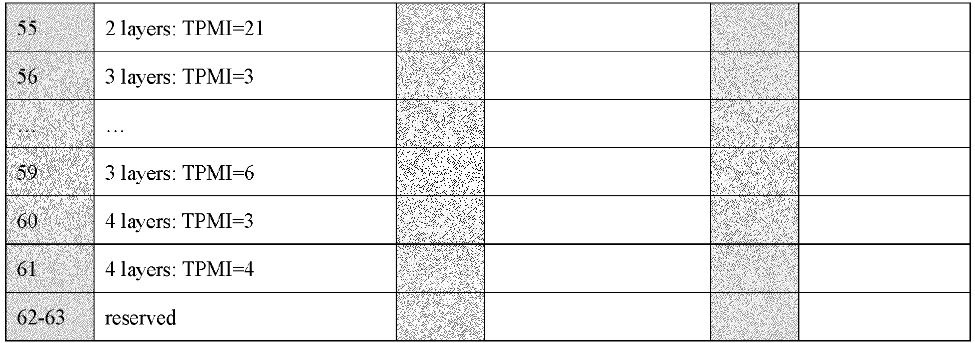

That is to say, a number of bits for different types of codebook subset corresponding to the Table 1 (also known as "Table 7.3.1.1.2-2") above can be represented by Table 2 below:

**Table 2**

| codebookSubset = fully AndPartialAndNonCoherent | codebookSubset = partialAndNonCoherent | codebookSubset= nonCoherent |
|---|---|---|
| 6 bits | 5 bits | 4 bits |

With reference to the above embodiments, in order to support dynamic switching among a plurality of schemes, the bit width of the second TPMI field is determined according to the maximum value of the bit width required for more than one scheme. For example, for the second TPMI field, the bit width required for the second transmission scheme is less than the bit width required for the first transmission scheme. For example, the first transmission scheme is the SDM scheme, and the second transmission scheme is one of the mTRP scheme, the FDM scheme, and the SFN scheme.

For example, for the first transmission scheme (such as the SDM scheme), the second TPMI field is determined according to the Table 1 (also known as "Table 7.3.1.1.2-2") above, that is, the bit width required for the second TPMI field is shown in Table 2; for the second transmission scheme (such as one of the mTRP scheme, the FDM scheme, the SFN scheme), the second TPMI field is determined according to Table 3 (also known as "Table 7.3.1.1.2-2C") below, and therefore, the bit width required for the second TPMI field is shown in Table 4.

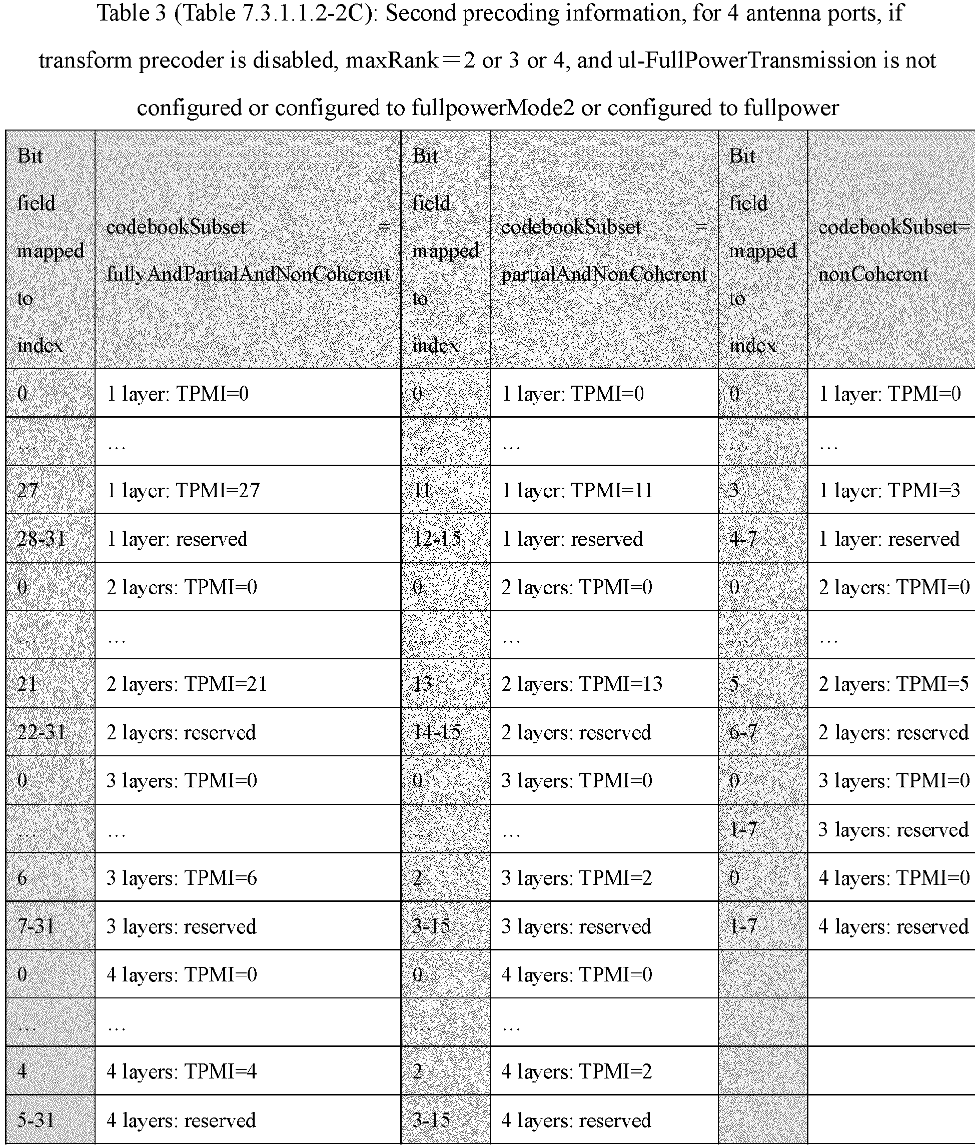

That is to say, a number of bits for different types of codebook subset corresponding to the Table 3 (also known as "Table 7.3.1.1.2-2C") above can be represented by Table 4 below:

**Table 4**

| codebookSubset = fullyAndPartialAndNonCoherent | codebookSubset = partialAndNonCoherent | codebookSubset= nonCoherent |
|---|---|---|
| 5 bits | 4 bits | 3 bits |

In some embodiments, in order to support dynamic switching of the terminal equipment between the first transmission scheme and the second transmission scheme, the bit width of the second TPMI field is equal to the maximum value of the bit width of the second TPMI field in the first transmission scheme and the second transmission scheme.

In some embodiments, for the second TPMI field, in a case where the bit width required for a scheme is less than the bit width of the second TPMI field, when the terminal equipment uses the scheme, a most significant bit or a least significant bit of the second TPMI field is padded with "0".

For example, for the above example, the bit width in the Table 2 is larger than the bit width in the Table 4, therefore, the bit width of the second TPMI field is determined based on the Table 2. For example, for the second transmission scheme, for example, one of the mTRP scheme, the FDM scheme, and the SFN scheme, as mentioned above, the bit width of the second TPMI field required for the second transmission scheme (as shown in the Table 4) is less than the determined bit width of the second TPMI field (as shown in the Table 2), in a case where the terminal equipment uses the second transmission scheme, the most significant bit of the second TPMI field is padded with "0", the terminal equipment ignores the padded bits and the second TPMI can still be determined based on the Table 3 (also known as "Table 7.3.1.1.2-2C").

For example, taking a column "codebookSubset=fullyAndPartialAndNonCoherent" as an example, for a case where the first transmission scheme is the SDM scheme, the second TPMI field in the DCI indicates "110111", which indicates a row with index = 55 in the Table 1 (also known as "Table 7.3.1.1.2-2") above; for a case where the second transmission scheme is the mTRP scheme, first of all, a "0" bit needs to be padded in the most significant bit, and thus the second TPMI field in the DCI indicates, e.g., "011011", which still determines the rows in Table 3 (also known as "Table7.3.1.1.2-2C") according to the lowest five bits, that is, determines rows with index = 27 in the Table 3 (also known as "Table 7.3.1.1.2-2C") above according to "11011", further in combination with the layer number indicated in the first TPMI in the DCI, for example, L1 = 1, then such rows with index=27 that appear for a first time can be uniquely determined.

In some embodiments, this disclosure does not limit how dynamic switching between the first transmission scheme and the second transmission scheme can be achieved. For example, the terminal equipment determines the use of the first transmission scheme or the second transmission scheme based on a specific DCI field or based on a specific time-frequency resource indicated by the DCI.

In some embodiments, in at least two of the DMRS ports, a first part of the DMRS ports belong to a first CDM group, and a second part of the DMRS ports belong to a second CDM group, the first layer number or the first SRS resource set is associated with the first CDM group and the DMRS ports included therein, and the second layer number or the second SRS resource set is associated with the second CDM group and the DMRS ports included therein, in which the first CDM group is a CDM group to which a first DMRS port of at least two of the DMRS ports belongs. In some embodiments, the first CDM group includes a DMRS port 0, and the second CDM group includes a DMRS port 2 and a DMRS port 3.

For example, a CDM group refers to that different DMRS ports may share a same time-frequency resource. For example, different DMRS ports are distinguished using different orthogonal codes in a time domain and a frequency domain. Different CDM groups use different time-frequency resources. In addition, refer to relevant provisions in the relevant art and standards for a specific mapping relationship between the DMRS ports and the CDM groups, which is not limited in this disclosure.

How to determine the DMRS ports is described below.

In some embodiments, for the SDM scheme, the DMRS ports are determined based on the sum of L1 and L2 and the antenna ports field.

For example, for the SDM scheme, in a case where L1 and L2 are obtained based on the foregoing embodiments, a rank of the SDM scheme is rank = L1 + L2. An indication of the DMRS ports by the antenna ports field depends on the rank. The rank is one of lookup table parameters. Different ranks correspond to different DMRS port lookup tables. The antenna ports field indicates a DMRS port configuration in the lookup table.

In some embodiments, different DMRS ports belong to two CDM groups, a first part of the DMRS ports belong to a first CDM group, and a second part of the DMRS ports belong to a second CDM group, the first layer number or the first SRS resource set is associated with the first CDM group and the DMRS ports included therein, and the second layer number or the second SRS resource set is associated with the second CDM group and the DMRS ports included therein, in which the first CDM group is a CDM group to which a first DMRS port of at least two of the DMRS ports belongs.

For example, in a case where the SDM scheme is configured or indicated, a DMRS port 0, a DMRS port 2, a DMRS port 3 may be indicated, in other words, the DMRS port 0, the DMRS port 2, the DMRS Port 3 are a combination of DMRS ports that can be used for the SDM scheme.

In some embodiments, the first TPMI is associated with the CDM group to which a first one of the DMRS ports belongs, and the second TPMI is associated with the other CDM group. For example, the first CDM group includes the DMRS port 0, and the second CDM group includes the DMRS port 2 and the DMRS port 3.

For example, the first DMRS port of the DMRS ports is the port 0, the CDM group to which the first DMRS port belongs is a CDM group 0, and the first TPMI is associated with the DMRS port 0 and the CDM group 0; the DMRS port 2 and the DMRS port 3 belong to the second CDM group, i.e., a CDM group 1, and therefore, the second TPMI is associated with the DMRS port 2, the DMRS port 3, and the CDM group 1.

For example, for the SDM scheme, the DMRS port is determined according to the antenna ports field. The bit width and meaning of the antenna ports field are shown in four Tables 5 to 8 below, in which Table 5 may also be known as "Table 7.3.1.1.2-8"; Table 6 may also be known as "Table 7.3.1.1 .2-9"; Table 7 may also be known as "Table 7.3.1.1.2-10"; Table 8 may also be known as "Table 7.3.1.1.2-11", among which, the "Table 7.3.1.1.2-8" to the "Table 7.3.1.1.2-11" correspond to different rank values, respectively, where rank = L1 + L2. The four Tables are used in a case where a DMRS type is Type 1 (i.e., dmrs-Type = 1) and a maximum length of a DMRS symbol is configured to be 1 symbol (i.e., maxLength = 1). For example, the table numbers in the "Table 7.3 .1.1.2-8" to the "Table 7.3.1.1.2-11" are exemplary descriptions based on current standards (such as relevant chapters in TS38.212), or may also be adaptively amended based on the updated chapters of progress of subsequent standards, which is not limited in this disclosure. For example, for the "Table 7.3.1.1.2-8" to the "Table 7.3.1.1.2-11", relevant rows of the "Table 7.3.1.1.2-8" to the "Table 7.3.1.1.2-11" may be reused in the current standard (for example, for the DMRS port(s), except for 0, 2, 3, a row corresponding to a shaded portion, such as a fourth row of Value = 3 in the "Table7.3.1 .1.2-9"); relevant rows may also be added on the basis of the Table in the current standard (for example, a row corresponding to the shaded portion in a case where the DMRS port(s) is 0, 2, 3, such as a second row of Value = 1 in the "Table 7.3.1.1.2-10").

For example, for the SDM scheme, the antenna ports field can only indicate rows where the DMRS ports belong to two different CDM groups, such as the rows marked with shades in the Table below, but cannot indicate other rows. L1 and L2 are determined according to the first TPMI field and the second TPMI field, respectively, the first TPMI is associated with the CDM group of the first DMRS port (first CDM group) indicated, and the second TPMI is associated with the other CDM group (second CDM group), in which the second CDM group is different from the first CDM group. The rows marked with shades in the Table below may be used for the SDM scheme, and the corresponding (L1, L2) are shown in a last column of the Table below.

For example, since L1 + L2 > 1, the content of the Table with rank = 1 is not applied, that is, the Table "Table 7.3.1.1.2-8" below is not used in the SDM scheme. For example, as shown in a first row of the "Table 7.3.1.1.2-10", the first TPMI is associated with the CDM group 0 (DMRS port 0 and DMRS port 1), and the second TPMI is associated with the CDM group 1 (DMRS port 2), also equivalent to: the first SRS resource set is associated with the DMRS port 0 and the DMRS port 1, and the second SRS resource set is associated with the DMRS port 2; as shown in a second row of the "Table 7.3.1.1.2-10", the first TPMI is associated with the CDM group 0 (DMRS port 0), and the second TPMI is associated with the CDM group 1 (DMRS port 2 and DMRS port 3), also equivalent to: the first SRS resource set is associated with the DMRS port 0, and the second SRS resource set is associated with the DMRS port 2 and DMRS port 3.

In some embodiments, after the (L1, L2) are determined based on the above method, the Tables (such as Tables 5-20) below corresponding to different combinations of (L1, L2) can be determined. The antenna ports field in the DCI may indicate rows marked with shades in the Table. That is to say, the Tables (such as Tables 5-20) are illustrative examples to facilitate understanding of the correspondence between (L1, L2) and different DMRS ports and/or different DMRS CDM groups. A column of (L1, L2) may not be present in the Tables actually used, which is not limited in this disclosure.

**Table 5 (Table 7.3.1.1.2-8): Antenna port(s), transform precoder is disabled, dmrs-Type=1, maxLength=1, rank=1**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

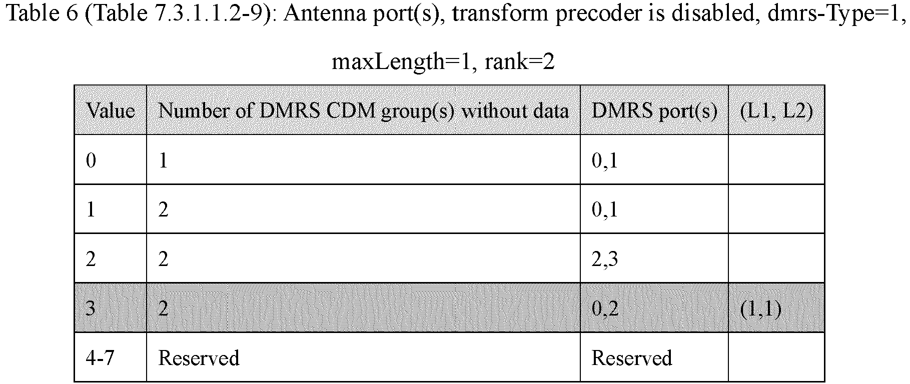

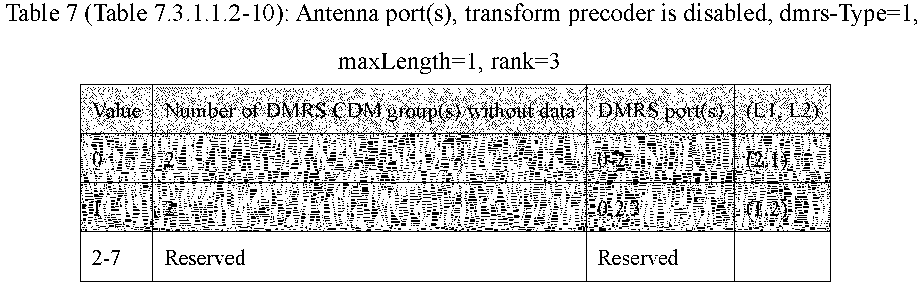

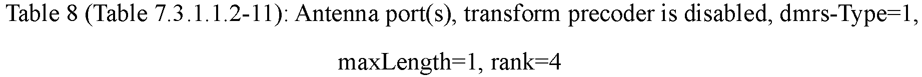

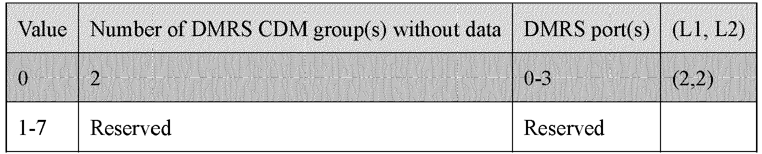

In some embodiments, the above four Tables 5 to 8 may be replaced with the four Tables 9 to 12 below.

For example, replacement is performed in a case where the DMRS type is Type 1 (i.e., dmrs-Type = 1), and the maximum length of the DMRS symbol is configured to be 2 symbols (i.e., maxLength = 2).

The process of determining the DMRS ports is similar to the previous process and will not be repeatedly described here. For example, Table 9 may also be known as "Table 7.3.1.1.2-12"; Table 10 may also be known as "Table 7.3.1.1.2-13"; Table 11 may also be known as "Table 7.3.1.1.2- 14"; and Table 12 may also be known as "Table 7.3.1.1.2-15".

**Table 9 (Table 7.3.1.1.2-12): Antenna port(s), transform precoder is disabled, dmrs-Type=1, maxLength=2, rank=1**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

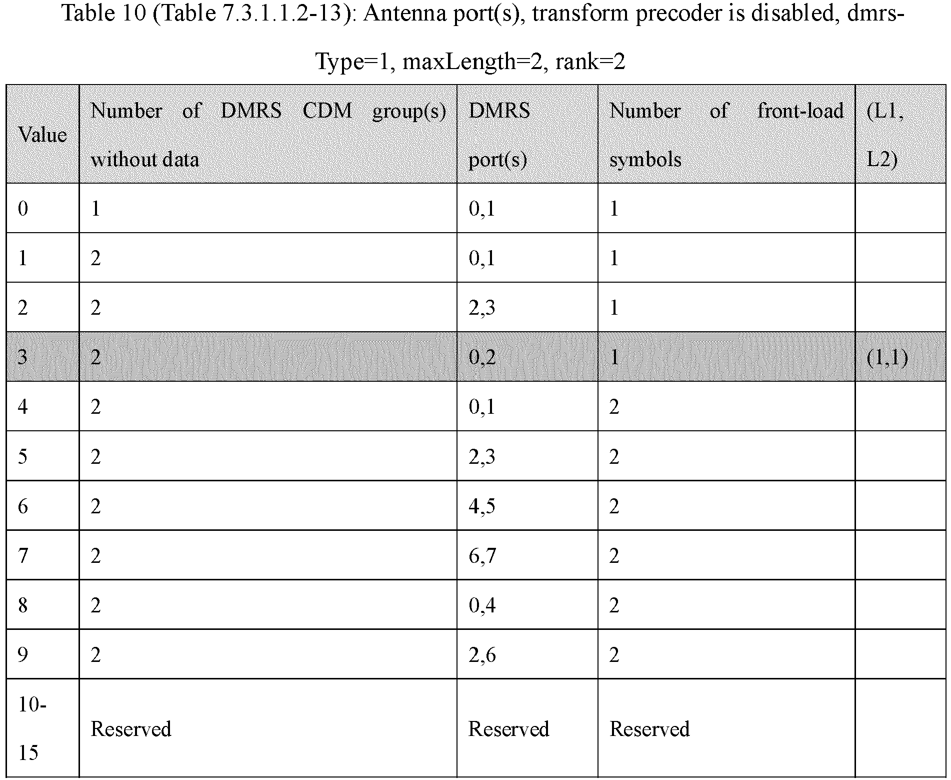

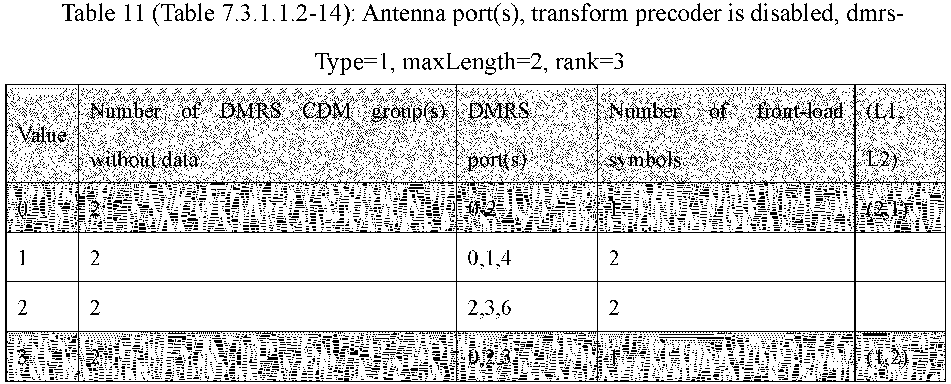

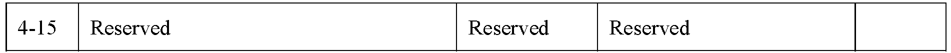

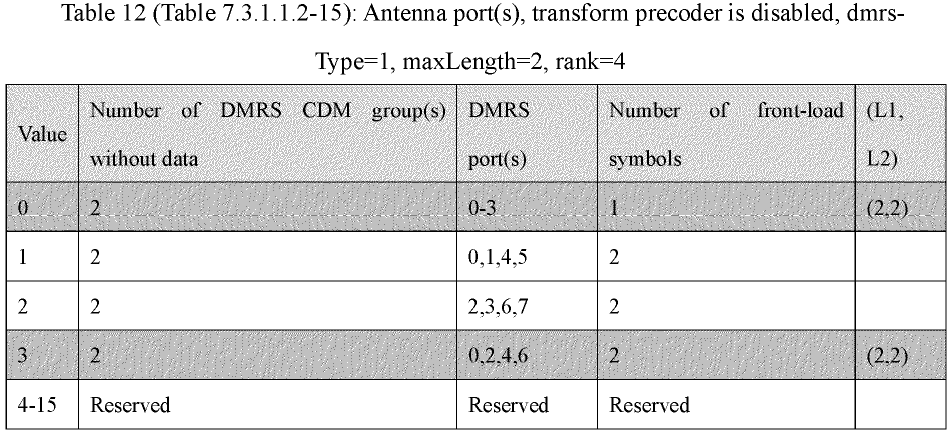

In some embodiments, the above four Tables 5 to 8 may be replaced with the four Tables 13 to 16 below.

For example, replacement is performed in a case where the DMRS type is Type 2 (i.e., dmrs-Type = 2), and the maximum length of the DMRS symbol is configured to be 1 symbol (i.e., maxLength = 1).

The process of determining the DMRS ports is similar to the previous process and will not be repeatedly described here. For example, Table 13 may also be known as "Table 7.3.1.1.2-16"; Table 14 may also be known as "Table 7.3.1.1.2-17"; Table 15 may also be known as "Table 7.3.1.1.2-18"; and Table 16 may also be known as "Table 7.3.1.1.2-19".

**Table 13 (Table 7.3.1.1.2-16): Antenna port(s), transform precoder is disabled, dmrs-Type=2, maxLength=1, rank=1**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

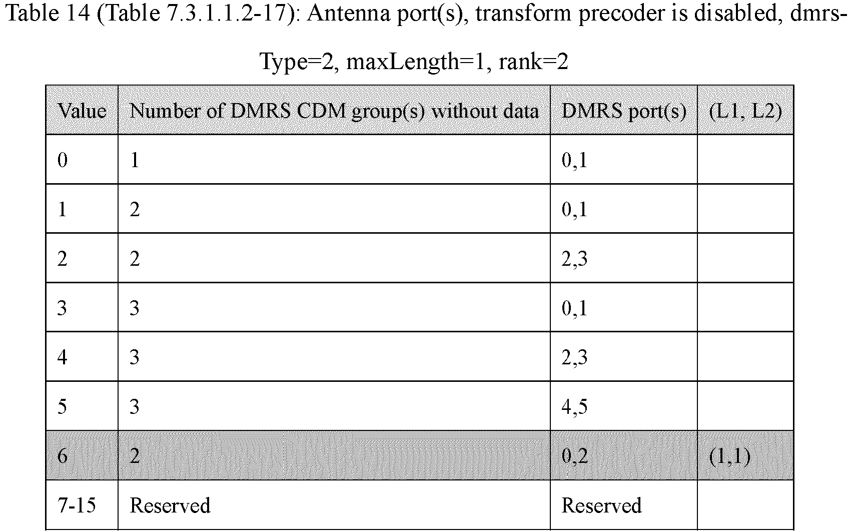

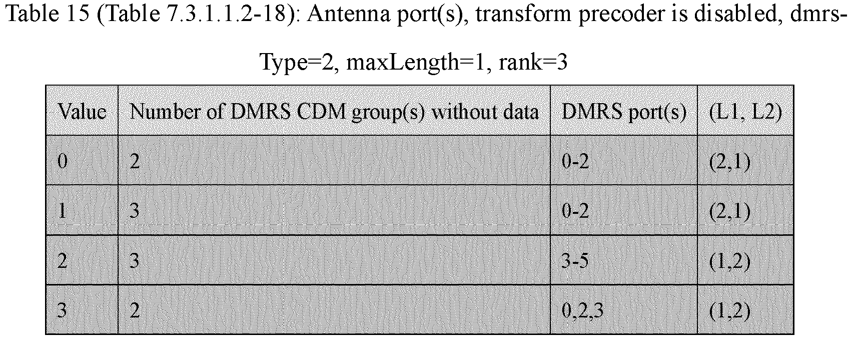

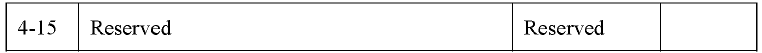

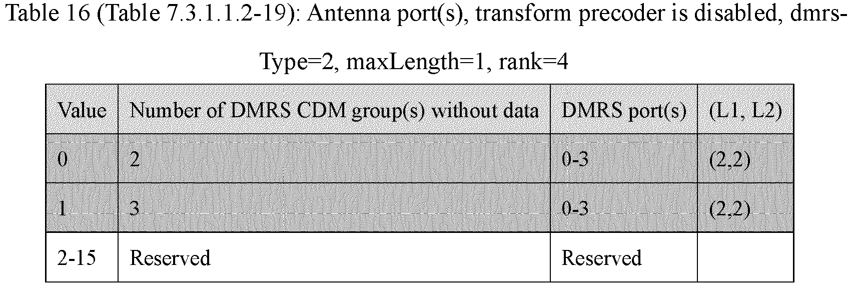

In some embodiments, the above four Tables 5 to 8 may be replaced with the four Tables 17 to 20 below.

For example, replacement is performed in a case where the DMRS type is Type 2 (i.e., dmrs-Type = 2), and the maximum length of the DMRS symbol is configured to be 2 symbols (i.e., maxLength = 2).

The process of determining the DMRS ports is similar to the previous process and will not be repeatedly described here. For example, Table 17 may also be known as "Table 7.3.1.1.2-20"; Table 18 may also be known as "Table 7.3.1.1.2-21"; Table 19 may also be known as "Table 7.3.1.1.2-22"; and Table 20 may also be known as "Table 7.3.1.1.2-23".

**Table 17 (Table 7.3.1.1.2-20): Antenna port(s), transform precoder is disabled, dmrs-Type=2, maxLength=2, rank=1**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

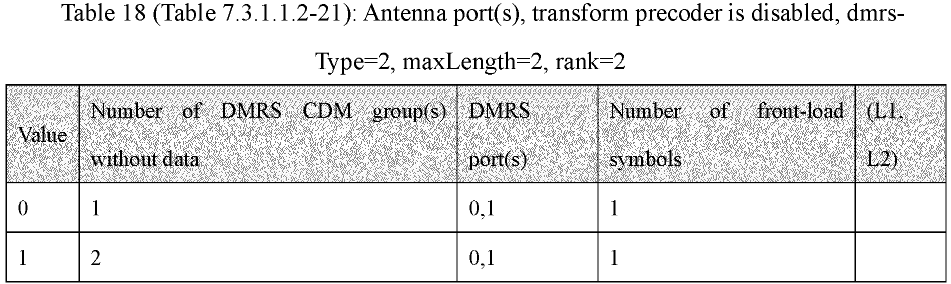

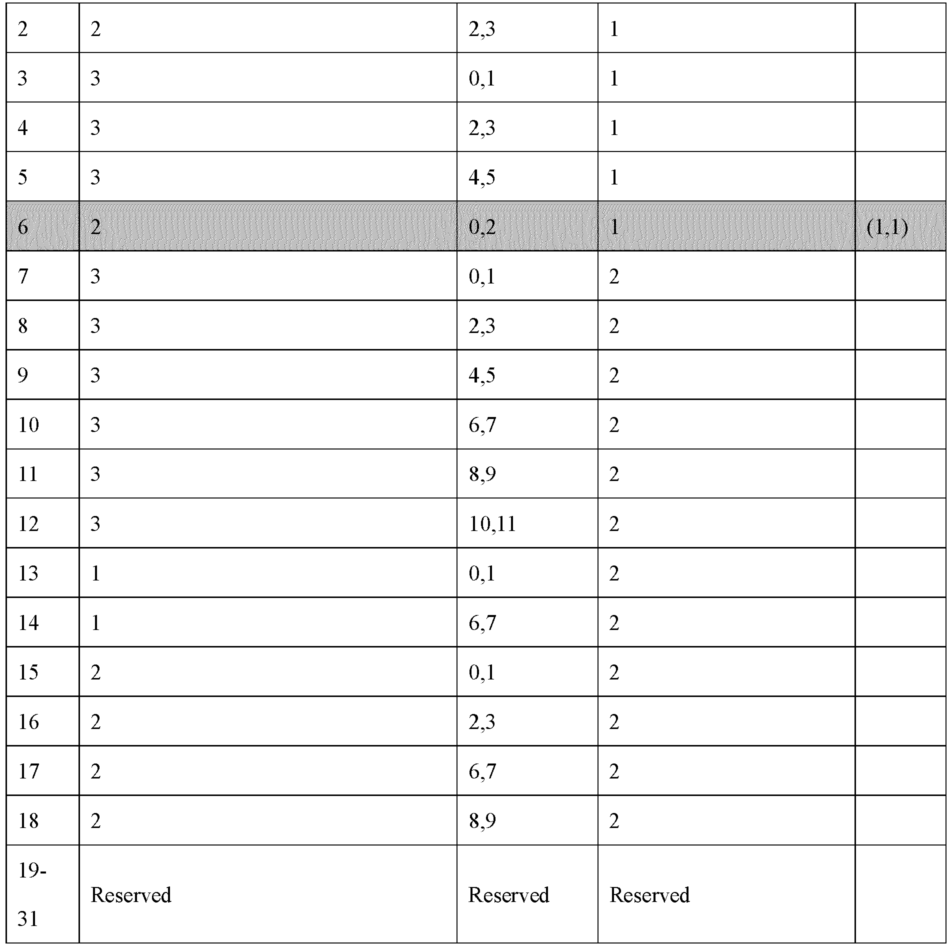

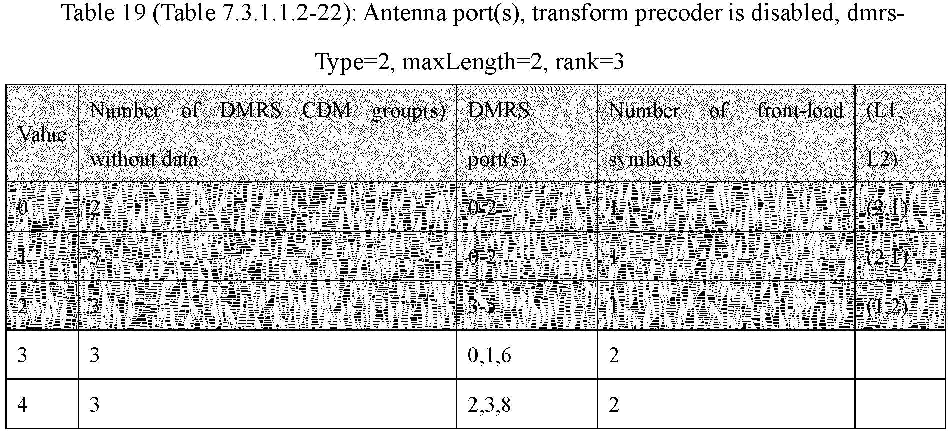

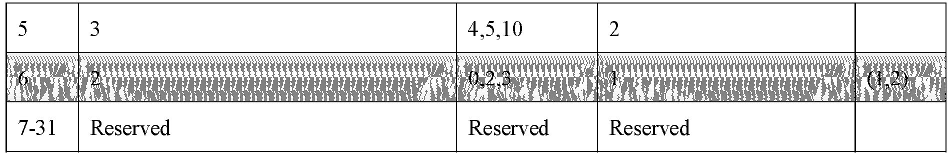

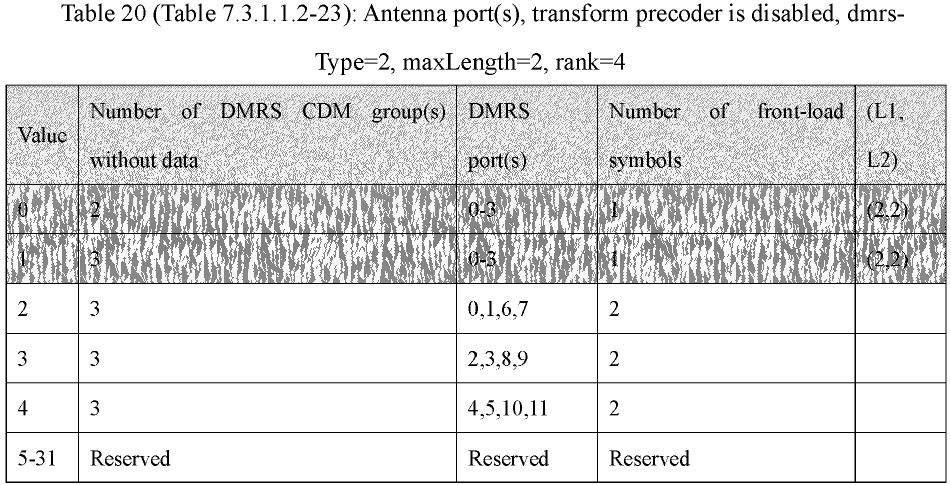

In some embodiments, for the sTRP scheme and the mTRP scheme, the DMRS ports may also be determined according to the four Tables above, where rank = L1 = L2. For example, the DCI indicates the terminal equipment to use a specific one of the sTRP scheme, the mTRP scheme and the SDM scheme. For the sTRP scheme and the mTRP scheme, the DMRS ports are determined according to the above 4 Tables (Table 5-Table 8, or, Table 9-Table 12, or, Table 13-Table 16, or, Table 17-Table 20), where rank = L1 = L2. For the SDM scheme, the DMRS ports are also determined according to the above 4 Tables (Table 5-Table 8, or, Table 9-Table 12, or, Table 13-Table 16, or, Table 17-Table 20), where rank = L1 + L2. Thus, dynamic switching among the sTRP scheme, the mTRP scheme and the SDM scheme can be achieved.

In some embodiments, for the schemes other than the SDM scheme in STxMP, such as the FDM scheme, the SFN scheme, the DMRS ports may also be determined according to the above four Tables (Table 5-Table 8, or, Table 9-Table 12, or, Table 13-Table 16, or, Table 17-Table 20), where rank = L1 = L2. For example, DCI indicates the terminal equipment to use a specific scheme among the sTRP scheme, the mTRP scheme, the FDM scheme, the SFN scheme and SDM scheme. For the sTRP scheme, the mTRP scheme, the FDM scheme, and the SFN scheme, the DMRS ports are determined according to the above four Tables (Table 5-Table 8, or, Table 9-Table 12, or, Table 13-Table 16, or, Table 17-Table 20), where rank = L1 = L2. For the SDM scheme, the DMRS ports are determined according to the above 4 Tables (Table 5-Table 8, or, Table 9-Table 12, or, Table 13-Table 16, or, Table 17-Table 20), where rank = L1 + L2. Thus, dynamic switching of the sTRP scheme, the mTRP scheme, the FDM scheme, the SFN scheme and the SDM scheme can be achieved.

In some embodiments, in a case where the STxMP scheme is configured or indicated, the DMRS ports may be determined according to the above 4 Tables (Table 5-Table 8, or, Table 9-Table 12, or, Table 13-Table 16, or, Table 17-Table 20), in which the STxMP scheme includes at least one of the SDM scheme, the FDM scheme and the SFN scheme.

For example, the terminal equipment is configured by RRC signaling to use the SDM scheme, the terminal equipment may be further indicated by the DCI to use which one of the sTRP scheme, the mTRP scheme and the SDM scheme, and the terminal equipment may determine the DMRS ports according to the above four Tables (Table 5 - Table 8, or, Table 9 - Table 12, or, Table 13 - Table 16, or, Table 17 - Table 20).

For example, the terminal equipment is configured by RRC signaling to use the STxMP scheme, and the terminal equipment may be further indicated by the DCI to use which one of the sTRP scheme, the mTRP scheme, the FDM scheme, the SFN scheme and the SDM scheme, and the terminal equipment may determine the DMRS ports according to the above 4 Tables (Table 5-Table 8, or Table 9-Table 12, or Table 13-Table 16, or Table 17-Table 20). For example, if the terminal equipment is indicated by the DCI to use the SDM scheme, the terminal equipment determines the DMRS ports according to the above four Tables (Table 5-Table 8, or Table 9-Table 12, or Table 13-Table 16, or Table 17-Table 20).

In some embodiments, in a case where uplink data is transmitted in the SFN scheme, the TPMI and the layer number are determined according to the first TPMI field, the second TPMI field is reserved, or the second TPMI field is not present; and the DMRS ports are determined according to the layer number and the antenna ports field.

In some embodiments, in a case where uplink data is transmitted in the SFN scheme, two SRS resources are determined according to two SRI fields.

For example, for the SFN scheme, the two panels use same TPMI, layer number, and DMRS ports, thus the TPMI and the layer number L may be determined only based on the first TPMI field, the second TPMI field is reserved, that is, not used, or the second TPMI field is not included in the UL DCI, that is, only the first TPMI field is included; the DMRS ports may be determined according to the above 4 Tables (Table 5-Table 8, or Table 9-Table 12, or Table 13-Table 16, or Table 17-Table 20), where rank = L, thus the TPMI, layer number and DMRS ports in the SFN scheme can be determined. For example, the UL DCI also includes two SRI fields indicative of two SRS resources associated with two panels, respectively. Thus, transmission of uplink data can be supported based on accurate uplink parameters under the SFN scheme.

The description is given above by taking the codebook based PUSCH transmission as an example; and a description is given below by taking the non-codebook based PUSCH transmission as an example.

The TPMI does not need to be indicated for the non-codebook based PUSCH. No TPMI field exists in the UL DCI. For example, the first indication field is the first SRI field, and/or the second indication field is the second SRI field.

FIG. 4 is another example diagram of determining a layer number and a DMRS port according to an embodiment of this disclosure.

In some embodiments, the layer number may be determined based on the first SRI field and/or the second SRI field. For example, the layer number is equal to the number of SRS resources indicated by the first SRI field and/or the second SRI field. For example, a method of determining a bit width of the second SRI field is the same as the foregoing method, and will not be repeatedly described here.

Therefore, unlike the L1 and the L2 in FIG. 3 determined based on the two TPMI fields, for the non-codebook based PUSCH, the L1 and the L2 are determined based on the first SRI field and the second SRI field, respectively. For example, the first SRI field indicates one SRS resource, the second SRI field indicates two SRS resources, (L1, L2) corresponds to (1, 2), and a method of determining the DMRS port based on (L1, L2) is the same as the foregoing method and will not be repeatedly described here.

In some embodiments, in a case where uplink data is transmitted in the first transmission scheme, the first layer number is determined according to the first indication field, and the second layer number is determined according to the second indication field, in which the first layer number and the second layer number are identical, or, the first layer number and the second layer number are different; and the DMRS ports are determined according to the correspondence between the first layer number, the second layer number and the DMRS ports, and in which the second field is reserved. The transmission of codebook based uplink data and non-codebook based uplink data will be described below in examples, respectively.

A description is given below by taking the codebook based PUSCH transmission as an example.

In some embodiments, for example, the first indication field is a first TPMI field, and the second indication field is a second TPMI field. For example, the first TPMI and the first layer number (L1) are determined according to the first TPMI field of the DCI, the second TPMI and the second layer number (L1) are determined according to the second TPMI field of the DCI, and the bit width of the second TPMI field is determined according to the maximum value of the bit width required for more than one scheme. The DMRS ports are determined according to (L1, L2). The antenna ports field is a reserved field and is not used.

In some embodiments, the bit width of the second indication field is equal to the maximum bit width of the second indication field in the first transmission scheme and the second transmission scheme; the bit width of the second indication field in the first transmission scheme is greater than or equal to the bit width of the second indication field in the second transmission scheme; and the bit width of the second indication field is equal to the bit width of the first indication field.

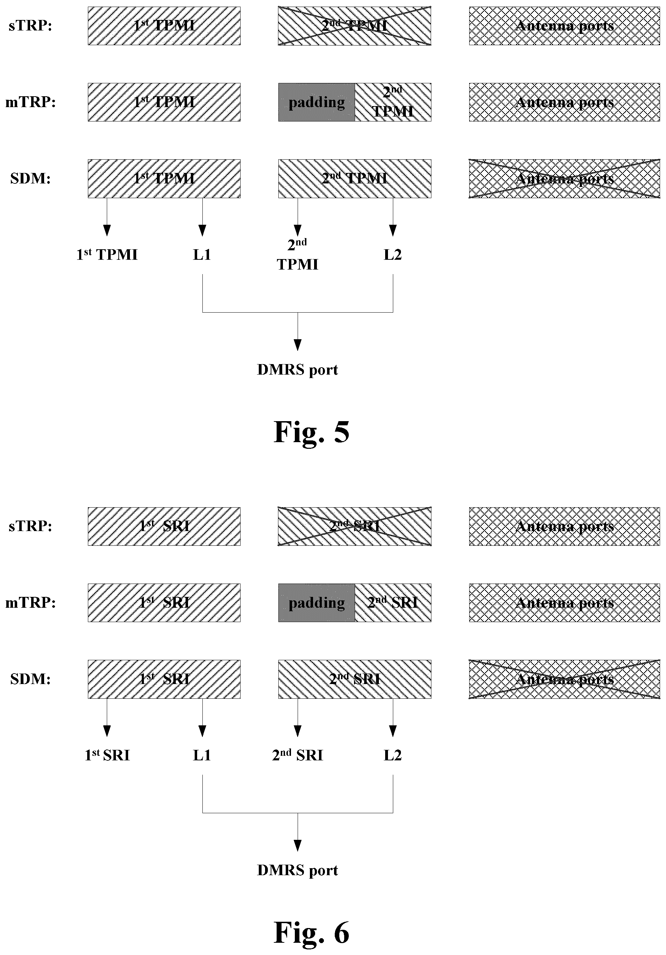

FIG. 5 is another example diagram of determining a layer number and a DMRS port according to an embodiment of this disclosure. For example, the first indication field is the first TPMI field, the second indication field is the second TPMI field, and the second field is the antenna ports field. For example, the first transmission scheme is the SDM scheme, and the second transmission scheme includes one of the sTRP scheme, the mTRP scheme, the FDM scheme or the SFN scheme. FIG. 5 takes the sTRP scheme and the mTRP scheme as examples.

For example, for the SDM scheme, the first TPMI and the first layer number (L1) are indicated by the first TPMI field of the DCI, the second TPMI and the second layer number (L2) are indicated by the second TPMI field of the DCI, and the bit width of the second TPMI field is determined according to the maximum bit width among the three schemes. For example, a method of determining a bit width of the second TPMI field is the same as that described above, and will not be repeatedly described here.

As illustrated in FIG. 5, the terminal equipment determines the L1 and the L2 according to the first TPMI field and the second TPMI field, that is, obtains (L1, L2), and then determines the DMRS port corresponding to (L1, L2) according to the Table 21 below. In other words, (L1, L2) has a one-to-one mapping relationship with the DMRS ports. Therefore, the terminal equipment determines the DMRS ports based on a predefined mapping relationship, and the antenna ports field is a reserved field, and is not used. For example, the Table 21 can be set in a predefined manner, which is not limited in this disclosure.

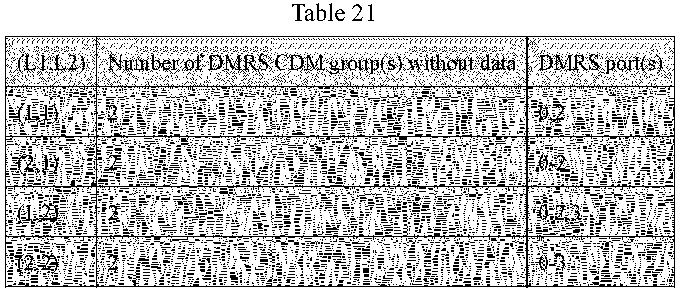

For example, in each row in the Table 21, the DMRS ports belong to two CDM groups, the CDM group of the first DMRS port is known as the first CDM group (for example, CDM group 0), and the other CDM group is known as the second CDM group (for example, CDM group 1), then L1 is equal to the number of DMRS ports in the first CDM group, and L2 is equal to the number of DMRS ports in the second CDM group. For example, in a case where (L1, L2) determined by the terminal equipment according to the first TPMI field and the second TPMI field is (2, 1), the DMRS port is determined to be 0-2 based on the second row of the Table 21. Similar to the foregoing method, the first TPMI is associated with the CDM group 0 (DMRS port 0 and DMRS port 1), and the second TPMI is associated with the CDM group 1 (DMRS port 2), also equivalent to: the first SRS resource set is associated with the DMRS port 0 and the DMRS port 1, and the second SRS resource set is associated with the DMRS port 2.

For example, an association relationship between TPMIs, CDM groups and DMRS ports in each row of the Table 21 may be predefined, which is not limited in this disclosure.

The description is given above by taking the codebook based PUSCH transmission as an example; and a description is given below by taking the non-codebook based PUSCH transmission as an example.

The TPMI does not need to be indicated for the non-codebook based PUSCH. No TPMI field exists in the UL DCI. For example, the first indication field is the first SRI field, and/or the second indication field is the second SRI field.

FIG. 6 is another example diagram of determining a layer number and a DMRS port according to an embodiment of this disclosure

In some embodiments, the layer number may be determined based on the first SRI field and/or the second SRI field. For example, the layer number is equal to the number of SRS resources indicated by the first SRI field and/or the second SRI field. For example, a method of determining a bit width of the second SRI field is the same as the foregoing method, and will not be repeatedly described here.

Therefore, unlike the L1 and the L2 in FIG. 5 determined based on the two TPMI fields, for the non-codebook based PUSCH, the L1 and the L2 are determined based on the first SRI field and the second SRI field, respectively. For example, the first SRI field indicates two SRS resources, the second SRI field indicates one SRS resource, (L1, L2) corresponds to (1, 2); and a method of determining a DMRS port based on (L1, L2) is the same as the foregoing method and will not be repeatedly described here.

In a case where uplink data is transmitted in the first transmission scheme, the DMRS port is determined according to the second field; the first layer number and the second layer number of the first transmission scheme are determined according to the correspondence between the DMRS ports and the layer numbers. The first indication field is determined under the condition that the first layer number is known, and the second indication field is determined under the condition that the second layer number is known. The transmission of codebook based uplink data and non-codebook based uplink data will be described below in examples, respectively.

A description is given below by taking the codebook based PUSCH transmission as an example.

In some embodiments, the bit width of the first indication field is equal to the maximum bit width of the first indication field in the first transmission scheme and the second transmission scheme; the bit width of the first indication field in the first transmission scheme is less than or equal to the bit width of the first indication field in the second transmission scheme; the bit width of the second indication field is equal to the maximum bit width of the second indication field in the first transmission scheme and the second transmission scheme; the bit width of the second field is equal to the maximum bit width of the second field in the first transmission scheme and the second transmission scheme. The bit width of the second field in the first transmission scheme is less than or equal to the bit width of the second field in the second transmission scheme.

In some embodiments, the bit width of the second indication field is equal to the bit width of the first indication field.

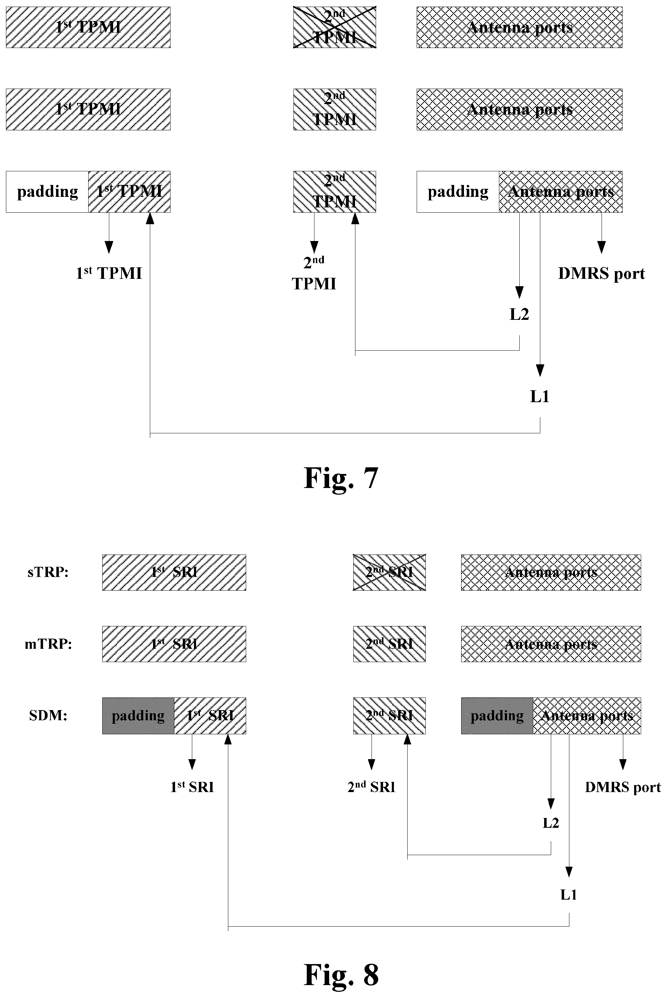

FIG. 7 is another example diagram of determining a layer number and a DMRS port according to an embodiment of this disclosure. For example, the first indication field is the first TPMI field, the second indication field is the second TPMI field, and the second field is the antenna ports field. For example, the first transmission scheme is the SDM scheme, and the second transmission scheme includes one of the sTRP scheme, the mTRP scheme, the FDM scheme or the SFN scheme. FIG. 7 takes the sTRP scheme and the mTRP scheme as examples.

In some embodiments, for example, for the SDM scheme, the DMRS port and (L1, L2) are determined according to the antenna ports field, for example, based on a new lookup table (e.g., Table 22 below), and the antenna ports field indicates a configuration of DMRS port, L1 and L2 in the lookup table, i.e., indicates a line.

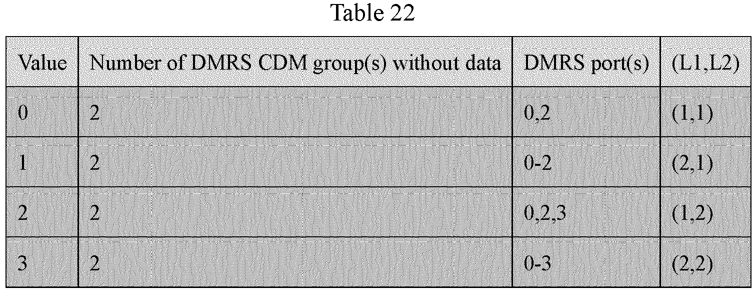

In some embodiments, the bit width of the second field is equal to the maximum bit width of the second field in the first transmission scheme and the second transmission scheme; and the bit width of the second field in the first transmission scheme is less than or equal to the bit width of the second field in the second transmission scheme. For example, as illustrated in FIG. 7, for the SDM scheme, the bit width of the antenna ports field is less than the bit width of the antenna ports field of sTRP or mTRP. In order to support dynamic switching among the SDM scheme, the sTRP scheme and the mTRP scheme, the bit width of the antenna ports field is equal to the maximum bit width of the antenna ports field in the SDM scheme, the sTRP scheme and the mTRP scheme. Therefore, in a case where the required bit width of the antenna ports field of a specific scheme decreases, the bit width is padded with bits.

In some embodiments, the bit width of the first indication field is equal to the maximum bit width of the first indication field in the first transmission scheme and the second transmission scheme; the bit width of the first indication field in the first transmission scheme is less than or equal to the bit width of the first indication field in the second transmission scheme; the bit width of the second indication field is equal to the maximum bit width of the second indication field in the first transmission scheme and the second transmission scheme.

For example, as illustrated in FIG. 7, provided that the antenna ports field indicates (L1, L2), the second TPMI field indicates the second TPMI under the condition that L2 is known. Since the mTRP scheme also indicates the second TPMI under the condition that L2 is known, the second TPMI fields of the SDM scheme and the mTRP scheme have a same bit width. The second TPMI fields of the SDM scheme and the mTRP scheme have a same number of bits as those in the Table 4 above.

Similarly, the first TPMI field of the SDM scheme indicates the first TPMI under the condition that L1 is known, thus the bit width of the first TPMI field is equal to the bit width of the second TPMI field, e.g., identical to the number of bits in the Table 4 above. However, since the first TPMI field of the mTRP scheme needs to indicate the first TPMI and the L1, a larger bit width than the second TPMI field is required, identical to the number of bits in the Table 2 above. In order to support dynamic switching among the SDM scheme, the sTRP scheme and the mTRP scheme, the bit width of the first TPMI field needs to be determined according to the maximum bit width among the three schemes, i.e., equal to the bit width of the mTRP scheme. Therefore, the first TPMI field of the SDM scheme needs to be padded with bits.

A method of determining a bit width of a second field is described in an example below.

In some embodiments, for the antenna ports field, the bit width of the first transmission scheme is less than the bit width of the second transmission scheme. For example, the first transmission scheme is the SDM scheme, and the second transmission scheme is one of the sTRP scheme, the mTRP scheme, the FDM scheme, and the SFN scheme.

For example, for the second transmission scheme, the antenna ports field is determined according to the Table 5-Table 8 above, therefore, the required bit width of the antenna ports field is 3 bits; for the first transmission scheme, the antenna ports field is determined according to the Table 22, therefore, the required bit width of the antenna ports field is 2 bits. In order to support the terminal equipment to dynamically switch between the first transmission scheme and the second transmission scheme, the bit width of the antenna ports field is equal to the maximum value of the bit width, for example, the maximum value is 3 bits. Therefore, the bit width of the antenna ports field is 3 bits.

In some embodiments, for the antenna ports field, in a case where the bit width required for a scheme is less than the bit width of the antenna ports field, when the terminal equipment uses the scheme, a most significant bit or a least significant bit of the antenna ports field is padded with "0".

For example, one of the above schemes is the SDM scheme. As mentioned above, the bit width (2 bits) of the antenna ports field of this scheme is less than the bit width (3 bits) of the antenna ports field. When the terminal equipment uses this scheme, the most significant bit of the antenna ports field is padded with "0", and the terminal equipment ignores the padded bits and can still determine the DMRS ports based on the Table 22. For example, the indicated "001" is still determined that it is corresponding to the second row of the Table 22 according to the bit value of "01".

In some embodiments, for the SDM scheme, the DMRS ports and (L1, L2) are determined according to the antenna ports field.

For example, the DMRS ports and (L1, L2) are determined according to the antenna ports field. The bit width (2 bits) and meaning of the antenna ports field are shown in the Table 22. In each row in the Table below, the DMRS port belongs to two CDM groups, the CDM group of the first DMRS port is known as the first CDM group (e.g., CDM group 0), and the other CDM group is known as the second CDM group (e.g., CDM group 1), then the L1 is equal to the number of DMRS ports in the first CDM group, and the L2 is equal to the number of DMRS ports in the second CDM group.

In some embodiments, for the SDM scheme, the first TPMI is determined according to the L1, and/or the second TPMI is determined according to the L2.

For example, the terminal equipment obtains the DMRS ports and (L1, L2) according to the antenna ports field. The first TPMI is associated with the L1, and the second TPMI is associated with the L2. The first TPMI and the second TPMI can be determined according to the first TPMI field and the second TPMI field, provided that the L1 and the L2 are known. The bit width and meaning of the first TPMI field and the second TPMI field are as shown in Table 23 below.

Taking L2 = 2 as an example, corresponding to the row of 2 layers in the Table 23. For different restrictions on different codebook subset ("codebookSubset") types, the second TPMI may be indicated by 5 bits, 4 bits or 3 bits. For example, the number of bits is the same as that in the above Table 4. Similarly, the first TPMI can be determined using a same method.

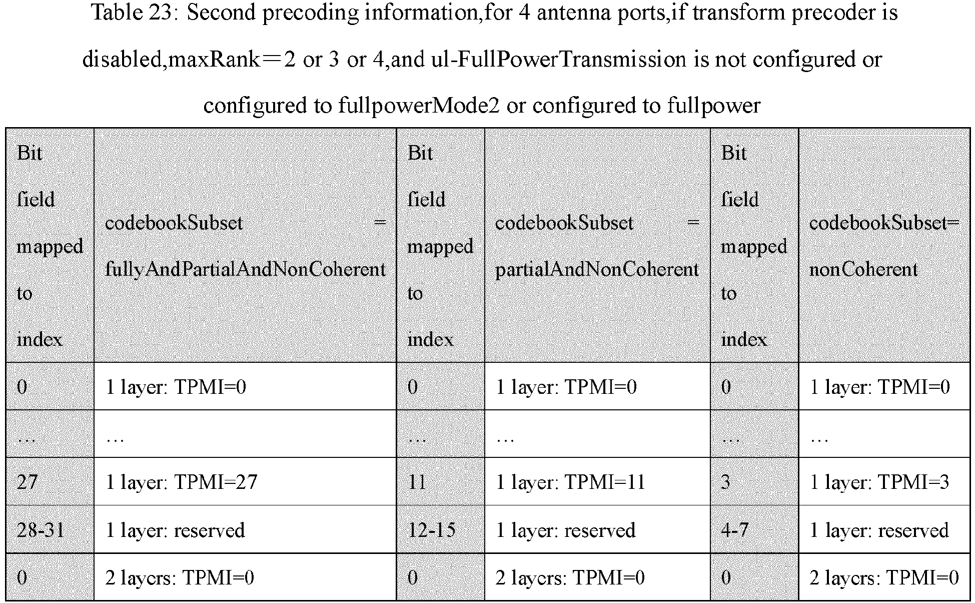

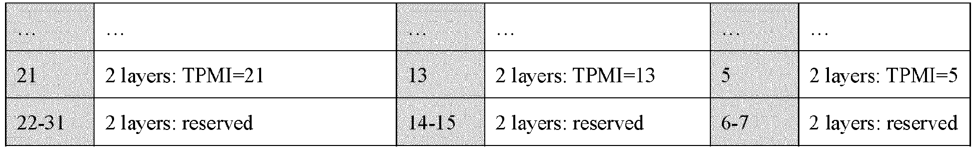

In some embodiments, the bit width of the second indication field is equal to the bit width of the first indication field.

For example, the second TPMI field indicates the second TPMI under the condition that the L2 is known, and the first TPMI field indicates the first TPMI under the condition that the L1 is known. The two fields indicate the TPMI based on the Table 23. Therefore, the second TPMI field and the first TPMI field have a same bit width.

A method of determining a bit width of a first TPMI field is described in an example below.

In some embodiments, the bit width of the first TPMI field is determined according to the maximum value of the bit width required for more than one scheme.

In some embodiments, for the first TPMI field, the bit width of the first transmission scheme is less than the bit width of the second transmission scheme. For example, the first transmission scheme is the SDM scheme, and the second transmission scheme is one of the sTRP scheme, the mTRP scheme, the FDM scheme, and the SFN scheme.

For example, for the mTRP scheme, the first TPMI field is determined according to the Table 1, and the required bit width of the first TPMI field is as shown in the Table 2 (i.e., 6 bits, 5 bits, 4 bits); for the SDM scheme, the first TPMI field is determined according to the Table 23 (a number of bits is the same as that in the Table 4, i.e., 5 bits, 4 bits, 3 bits). In order to support the terminal equipment to dynamically switch between the first transmission scheme and the second transmission scheme, the bit width of the first TPMI field is equal to the maximum value of the aforementioned bit width. For example, the Table 2 includes the maximum value of the aforementioned bit width, and therefore, the required bit width of the first TPMI field is as shown in the Table 2 (i.e., 6 bits, 5 bits, 4 bits).

In some embodiments, for the first TPMI field, in a case where the bit width required for a scheme is less than the bit width of the first TPMI field, when the terminal equipment uses the scheme, a most significant bit or a least significant bit of the first TPMI field is padded with "0".

For example, one of the above schemes is the SDM scheme. As mentioned above, the bit width of the first TPMI field of this scheme (as shown in the Table 4) is less than the bit width of the first TPMI field (as shown in the Table 2). When the terminal equipment uses this scheme, the most significant bit of the first TPMI field is padded with "0", and the terminal equipment ignores the padded bits and can still determine the first TPMI based on the Table 23. Refer to the foregoing method for details, and will not be repeatedly described here.

A method of determining a bit width of a second TPMI field is described in an example below.

In some embodiments, the bit width of the second TPMI field is determined according to the maximum value of the bit width required for more than one scheme.

In some embodiments, for the second TPMI field, the bit width of the first transmission scheme is equal to the bit width of the second transmission scheme. For example, the first transmission scheme is the SDM scheme, and the second transmission scheme is one of the sTRP scheme, the mTRP scheme, the FDM scheme, and the SFN scheme.

For example, for the mTRP scheme, the second TPMI field is determined according to the Table 3, and the required bit width of the second TPMI field is as shown in the Table 4 (i.e., 5 bits, 4 bits, 3 bits); for the SDM scheme, the second TPMI field is determined according to the Table 23, the required bit width of the second TPMI field is as shown in the Table 4 (i.e., 5 bits, 4 bits, 3 bits); for the sTRP scheme, there is no need to use the second TPMI field. In order to support the terminal equipment to dynamically switch between the first transmission scheme and the second transmission scheme, the bit width of the second TPMI field is equal to the maximum value of the above bit width. For example, the Table 2 includes the maximum value of the above bit width, thus the required bit width of the first TPMI field is as shown in the Table 4 (i.e., 5 bits, 4 bits, 3 bits).

In some embodiments, for the second TPMI field, in a case where the bit width required for a scheme is less than the bit width of the first TPMI field, when the terminal equipment uses the scheme, the most significant bit or the least significant bit of the second TPMI field is padded with "0".

For example, one of the above schemes is the sTRP scheme. When the terminal equipment uses this scheme, all significant bits of the second TPMI field are padded with "0", and the terminal equipment ignores the padded bits.

The description is given above by taking the codebook based PUSCH transmission as an example. A description is given below by taking the non-codebook based PUSCH transmission as an example.

The TPMI does not need to be indicated for the non-codebook based PUSCH. No TPMI field exists in the UL DCI. For example, the first indication field is the first SRI field, and/or the second indication field is the second SRI field.

FIG. 8 is another example diagram of determining a layer number and a DMRS port according to an embodiment of this disclosure. For example, similar to the aforementioned codebook based PUSCH, the (L1, L2) and the DMRS port are determined based on the antenna ports field. Furthermore, the first SRI field and the second SRI field indicate the first SRI and the second SRI, respectively, under the condition that the L1 and the L2 are known. In addition, the methods of determining the bit width of the second field, the first SRI field, and the second SRI field are the same as the foregoing methods, and will not be repeatedly described here. Refer to the relevant art for the specific content of the first SRI field and the second SRI field for the first SRI indication and the second SRI indication, which is not limited in this disclosure.

The above implementations only illustrate the embodiments of this disclosure. However, this disclosure is not limited thereto, and appropriate variants may be made on the basis of these implementations. For example, the above implementations may be executed separately, or one or more of them may be combined together.

As can be seen from the above embodiments, the terminal equipment determines the layer numbers and the DMRS ports according to the received downlink control information, and transmits uplink data in a specific transmission scheme. Thus, parameters, such as the layer numbers and the DMRS ports, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

### Embodiments of a second aspect

The embodiments of this disclosure provide an uplink data receiving method, applied to a network device. The embodiments of this disclosure can be combined with the embodiments of the first aspect, or can be implemented independently. The same content as the embodiment of the first aspect will not be described again.

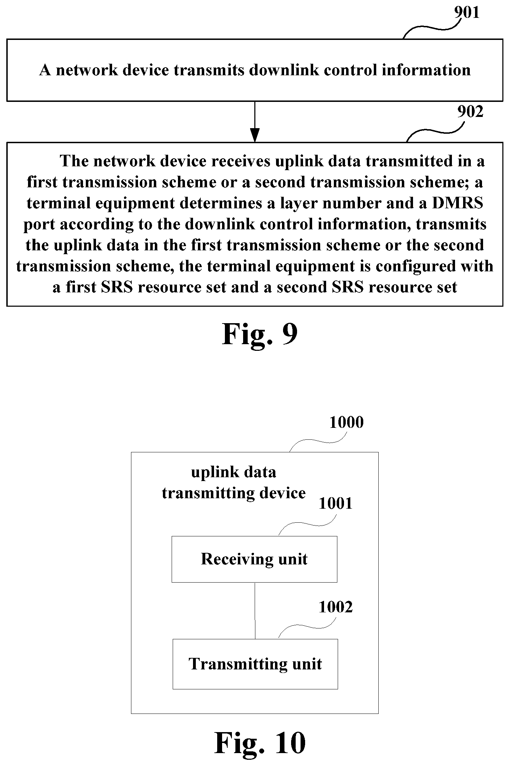

FIG. 9 is a schematic diagram illustrating an uplink data receiving method according to an embodiment of this disclosure. As illustrated in FIG. 9, the method includes:
901: a network device transmits downlink control information,
902: the network device receives uplink data transmitted in a first transmission scheme or a second transmission scheme;
in which a terminal equipment determines a layer number and a DMRS port according to the downlink control information, and transmits the uplink data in the first transmission scheme or the second transmission scheme, and in which the terminal equipment is configured with a first SRS resource set and a second SRS resource set.

It is worth noting that the FIG. 9 only schematically illustrates an embodiment of this disclosure, however, this disclosure is not limited thereto. For example, an order of execution of the operations may be appropriately adjusted, and furthermore, some other operations may be added, or some operations therein may be reduced. And appropriate variants may be made by those skilled in the art according to the above content, without being limited to what is contained in FIG. 9.

The above implementations only illustrate the embodiments of this disclosure. However, this disclosure is not limited thereto, and appropriate variants may be made on the basis of these implementations. For example, the above implementations may be executed separately, or one or more of them may be combined together.

As can be seen from the above embodiments, the terminal equipment determines the layer numbers and the DMRS ports according to the received downlink control information, and transmits uplink data in a specific transmission scheme. Thus, parameters, such as the layer numbers and the DMRS ports, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

### Embodiments of a third aspect

The embodiments of this disclosure provide an uplink data transmitting device. The device may be, for example, a terminal equipment, or may be one or some part(s) or component(s) configured in the terminal equipment. The terminal equipment is configured with a first SRS resource set and a second SRS resource set. In addition, the same content as the embodiments of the first to second aspects will not be described again.

FIG. 10 is a schematic diagram illustrating an uplink data transmitting device according to an embodiment of this disclosure.

As illustrated in FIG. 10, an uplink data transmitting device 1000 includes:
a receiving unit 1001 configured to receive downlink control information,
a transmitting unit 1002 configured to determine a layer number and a DMRS port according to the downlink control information, and transmit uplink data in a first transmission scheme or a second transmission scheme.

In some embodiments, the first transmission scheme includes a space division multiplexing (SDM) scheme; the second transmission scheme includes one of a single transmission and reception point (sTRP) scheme, a multiple transmission and reception point (mTRP) sTRP scheme, a frequency division multiplexing (FDM) scheme, or a single-frequency network (SFN) scheme. The downlink control information includes a first field and a second field, in which the first field includes a first indication field and/or a second indication field.

In some embodiments, in a case where uplink data is transmitted in the first transmission scheme, the first layer number is determined according to the first indication field, and the second layer number is determined according to the second indication field, in which the first layer number and the second layer number are identical, or, the first layer number and the second layer number are different; and the DMRS port is determined according to a sum of the first layer number and the second layer number and the second field.

In some embodiments, in at least two of the DMRS ports, a first part of the DMRS ports belong to a first CDM group, and a second part of the DMRS ports belong to a second CDM group, the first layer number or the first SRS resource set is associated with the first CDM group and the DMRS ports included therein, and the second layer number or the second SRS resource set is associated with the second CDM group and the DMRS ports included therein, in which the first CDM group is a CDM group to which a first DMRS port of at least two of the DMRS ports belongs.

**In** some embodiments, the first CDM group includes a DMRS port 0, and the second CDM group includes a DMRS port 2 and a DMRS port 3.

**In** some embodiments, in a case where uplink data is transmitted in the first transmission scheme, the first layer number is determined according to the first indication field, and the second layer number is determined according to the second indication field, in which the first layer number and the second layer number are identical or different; and the DMRS port is determined according to the correspondence between the first layer number, the second layer number and the DMRS port, and in which the second field is reserved.

**In** some embodiments, the bit width of the second indication field is equal to the maximum bit width of the second indication field in the first transmission scheme and the second transmission scheme; and the bit width of the second indication field in the first transmission scheme is greater than or equal to the bit width of the second indication field in the second transmission scheme.

**In** some embodiments, the bit width of the second indication field is equal to the bit width of the first indication field.

**In** some embodiments, in a case where uplink data is transmitted in the first transmission scheme, the DMRS port is determined according to the second field; the first layer number and the second layer number of the first transmission scheme are determined according to the correspondence between the DMRS ports and the layer numbers.

**In** some embodiments, the first indication field is determined under the condition that the first layer number is known, and the second indication field is determined under the condition that the second layer number is known.

**In** some embodiments, the bit width of the first indication field is equal to the maximum bit width of the first indication field in the first transmission scheme and the second transmission scheme.

**In** some embodiments, the bit width of the first indication field in the first transmission scheme is less than or equal to the bit width of the first indication field in the second transmission scheme.

In some embodiments, the bit width of the second indication field is equal to the maximum bit width of the second indication field in the first transmission scheme and the second transmission scheme; and/or the bit width of the second indication field is equal to the bit width of the first indication field.

In some embodiments, the bit width of the second field is equal to the maximum bit width of the second field in the first transmission scheme and the second transmission scheme.

In some embodiments, the bit width of the second field in the first transmission scheme is less than or equal to the bit width of the second field in the second transmission scheme.

In some embodiments, the first indication field indicates transmission parameters of a first panel or a first SRS resource set; and/or the second indication field indicates transmission parameters of a second panel or a second SRS resource set.

In some embodiments, the first indication field is a first TPMI field or a first SRI field; and/or the second indication field is a second TPMI field or a second SRI field; and the second field is an antenna ports field.

In some embodiments, in a case where codebook based uplink data is transmitted, the first indication field is a first TPMI field, and/or the second indication field is a second TPMI field; and in a case where non-codebook based uplink data is transmitted, the first indication field is the first SRI field, and/or the second indication field is the second SRI field.

In some embodiments, in a case where codebook-based uplink data is transmitted in the SFN scheme, the layer number and the TPMI are determined according to the first TPMI field; the second TPMI field is reserved or absent; and the DMRS port is determined according to the layer number and the antenna ports field.

In some embodiments, the downlink control information includes two SRS resource indicator (SRI) fields, in which the two SRS resources indicated by the two SRS resource indicator fields have a same number of SRS ports.

The above implementations only illustrate the embodiments of this disclosure. However, this disclosure is not limited thereto, and appropriate variants may be made on the basis of these implementations. For example, the above implementations may be executed separately, or one or more of them may be combined together.

It is worth noting that the components or modules related to this disclosure are only described above. However, this disclosure is not limited thereto. The uplink data transmitting device 1000 may also include other components or modules. Refer to the related arts for the specific content of these components or modules.

In addition, for the sake of simplicity, FIG. 10 only illustrates a connection relationship or a signaling direction between components or modules, however, those skilled in the art should appreciate that related arts such as bus connections can be adopted. The components or modules can be implemented by hardware facilities, such as a processor, a memory, a transmitter, a receiver, which is not limited in this disclosure.

As can be seen from the embodiments, the terminal equipment determines the layer number and the DMRS port according to the received downlink control information, and transmits uplink data in a specific transmission scheme. Thus, parameters, such as the layer number and the DMRS port, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

### Embodiments of a fourth aspect

The embodiments of this disclosure provide an uplink data receiving device. The device may be, for example, a network device, or may be one or some part(s) or component(s) configured in the network device. The same content as the embodiments of the first to third aspects will not be described again.

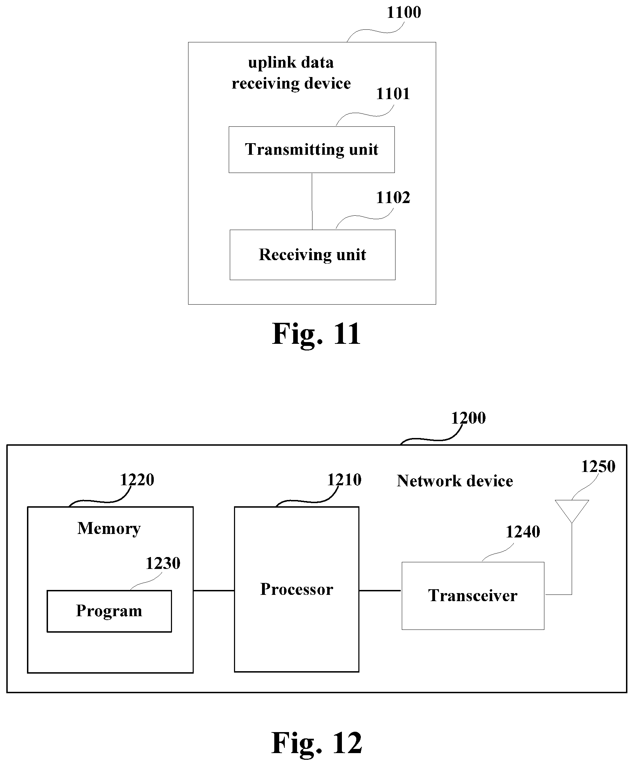

FIG. 11 is a schematic diagram illustrating an uplink data receiving device according to an embodiment of this disclosure. As illustrated in FIG. 11, the uplink data receiving device 1100 includes:
a transmitting unit 1101 configured to transmit downlink control information,
a receiving unit 1102 configured to receive uplink data transmitted in a first transmission scheme or a second transmission scheme;
in which a terminal equipment determines a layer number and a DMRS port according to the downlink control information, and transmits the uplink data in the first transmission scheme or the second transmission scheme, and in which the terminal equipment is configured with a first SRS resource set and a second SRS resource set.

The above implementations only illustrate the embodiments of this disclosure. However, this disclosure is not limited thereto, and appropriate variants may be made on the basis of these implementations. For example, the above implementations may be executed separately, or one or more of them can be combined together.

It is worth noting that the components or modules related to this disclosure are only described above. However, this disclosure is not limited thereto. The uplink data receiving device 1100 may also include other components or modules. Refer to the related arts for the specific content of these components or modules.

In addition, for the sake of simplicity, FIG. 11 only illustrates a connection relationship or a signaling direction between components or modules, however, those skilled in the art should appreciate that related arts such as bus connections can be adopted. The components or modules can be implemented by hardware facilities, such as a processor, a memory, a transmitter, a receiver, which is not limited in this disclosure.

As can be seen from the embodiments, the terminal equipment determines the layer number and the DMRS port according to the received downlink control information, and transmits uplink data in a specific transmission scheme. Thus, parameters, such as the layer number and the DMRS port, etc., can be flexibly indicated, and dynamic switching among different transmission schemes can be supported; and the terminal equipment can transmit uplink data using appropriate uplink transmission parameters, thereby ensuring the throughput or reliability of uplink data transmission.

### Embodiments of a fifth aspect

The embodiments of this disclosure also provide a communication system. Refer to FIG. 1. The same content as the embodiments of the first to fourth aspects will not be described again.

In some embodiments, a communication system 100 may at least include:
a network device configured to transmit downlink control information,
a terminal equipment configured with a first SRS resource set and a second SRS resource set, and to determine a layer number and a DMRS port according to the downlink control information, and transmit uplink data in a first transmission scheme or a second transmission scheme;
in which the network device receives the uplink data transmitted in the first transmission scheme or the second transmission scheme.

The embodiments of this disclosure also provide a network device, which may be, for example, a base station, which is not limited in this disclosure, and may also be other network device.

FIG. 12 is a schematic diagram illustrating a composition of a network device according to an embodiment of this disclosure. As illustrated in FIG. 12, a network device 1200 may include: a processor 1210 (e.g., central processing unit CPU) and a memory 1220 coupled to the processor 1210. The memory 1220 may store various data, and also store an information processing program 1230 that is executed under the control of the processor 1210.

In addition, as illustrated in FIG. 12, the network device 1200 may also include: a transceiver 1240 and an antenna 1250. The functions of the components are similar to those of the relevant art and will not be described here again. It is worth noting that the network device 1200 does not necessarily include all the components illustrated in FIG. 12. In addition, the network device 1200 may also include the components not illustrated in FIG. 12. Please refer to the relevant art.

The embodiments of this disclosure also provide a terminal equipment, which is not limited in this disclosure, and may also be other devices.

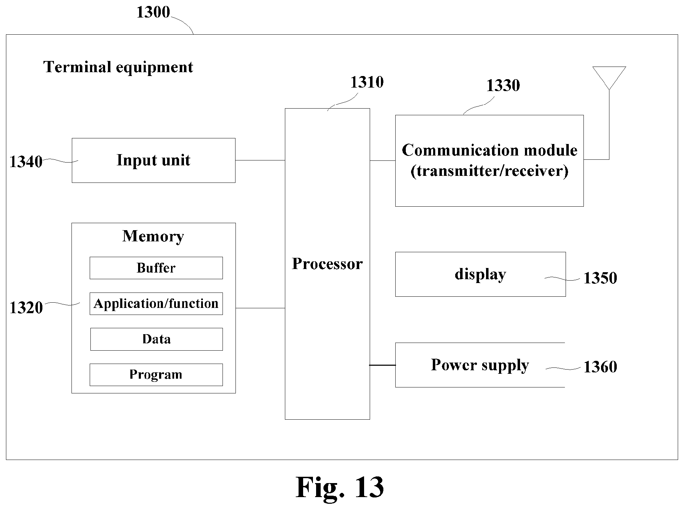

FIG. 13 is a schematic diagram illustrating a terminal equipment according to an embodiment of this disclosure. As illustrated in FIG. 13, a terminal equipment 1300 may include a processor 1310 and a memory 1320. The memory 1320 stores data and programs and is coupled to the processor 1310. It is worth noting that this figure is exemplary; and other types of structure may also be used to supplement or replace this structure in order to implement telecommunications functions or other functions.

For example, the processor 1310 may be configured to execute a program to implement the uplink data transmitting method in the embodiments of the first aspect. For example, the processor 1310 may be configured with a first SRS resource set and a second SRS resource set; to receive downlink control information; and determine a layer number and a DMRS port according to the downlink control information, and transmit uplink data in a first transmission scheme or a second transmission scheme.

As illustrated in FIG. 13, the terminal equipment 1300 may also include: a communication module 1330, an input unit 1340, a display 1350, and a power supply 1360. The functions of the components are similar to those in the relevant art and will not be described here again. It is worth noting that the terminal equipment 1300 does not necessarily include all the components illustrated in FIG. 13, and the above components are not necessarily required. In addition, the terminal equipment 1300 may also include the components not illustrated in FIG. 13. Please refer to the relevant art.

The embodiments of this disclosure also provide a computer program, wherein when a program is executed in a terminal equipment, the terminal equipment implements the uplink data transmitting method in the embodiments of the first aspect due to the program.

The embodiments of this disclosure also provide a storage medium storing a computer program, wherein the terminal equipment implements the uplink data transmitting method in the embodiments of the first aspect due to the computer program.

The embodiments of this disclosure also provide a computer program, wherein when a program is executed in a terminal equipment, the terminal equipment implements the uplink data receiving method in the embodiments of the second aspect due to the program.

The embodiments of this disclosure also provide a storage medium storing a computer program, wherein the terminal equipment implements the uplink data receiving method in the embodiments of the second aspect due to the computer program.

The above devices and methods of this disclosure may be implemented by hardware, or by hardware in combination with software. This disclosure relates to such a computer-readable program that when the program is executed by a logic device, the logic device is enabled to carry out the device or components as described above, or to carry out the methods or steps as described above. This disclosure also relates to a storage medium for storing the above program, such as a hard disk, a floppy disk, a CD, a DVD, and a flash memory, etc.

The methods/devices described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And these hardware modules, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.
As to implementations containing the above embodiments, supplements are further disclosed below.
1. A method of transmitting uplink data, applied to a terminal equipment, wherein the terminal equipment is configured with a first SRS resource set and a second SRS resource set, the method including:
   receiving, by the terminal equipment, downlink control information,
   determining a layer number and a DMRS port according to the downlink control information, and transmitting uplink data in a first transmission scheme or a second transmission scheme.
2. The method according to supplement 1, wherein
   the first transmission scheme includes an SDM scheme;
   the second transmission scheme includes one of an sTRP scheme, an mTRP scheme, a FDM scheme, or an SFN scheme;
   the downlink control information includes a first field and a second field; wherein the first field includes a first indication field and/or a second indication field.
3. The method according to supplement 2, wherein
   in a case where the uplink data is transmitted in the first transmission scheme, a first layer number is determined according to the first indication field, and a second layer number is determined according to the second indication field, wherein the first layer number is the same as or different from the second layer number; and
   the DMRS port is determined according to a sum of the first layer number and the second layer number and the second field.
4. The method according to supplement 3, wherein
   in at least two of the DMRS ports, a first part of the DMRS ports belong to a first CDM group, and a second part of the DMRS ports belong to a second CDM group,
   the first layer number or the first SRS resource set is associated with the first CDM group and the DMRS ports included therein, and the second layer number or the second SRS resource set is associated with the second CDM group and the DMRS ports included therein, and
   wherein the first CDM group is a CDM group to which a first DMRS port in at least two of the DMRS ports belongs.
5. The method according to supplement 4, wherein the first CDM group includes a DMRS port 0, and the second CDM group includes a DMRS port 2 and a DMRS port 3.
6. The method according to supplement 2, wherein
   in a case where the uplink data is transmitted in the first transmission scheme, the first layer number is determined according to the first indication field, and the second layer number is determined according to the second indication field, wherein the first layer number is the same as or different from the second layer number;
   the DMRS port is determined according to a correspondence between the first layer number, the second layer number and the DMRS port, and
   wherein the second field is reserved.
7. The method according to any one of supplements 3 to 6, wherein a bit width of the second indication field is equal to a maximum bit width of the second indication field in the first transmission scheme and the second transmission scheme.
8. The method according to supplement 7, wherein the bit width of the second indication field in the first transmission scheme is greater than or equal to the bit width of the second indication field in the second transmission scheme.
9. The method according to any one of supplements 3 to 6, wherein the bit width of the second indication field is equal to the bit width of the first indication field.
10. The method according to supplement 2, wherein
   in a case where the uplink data is transmitted in the first transmission scheme, the DMRS port is determined according to the second field;
   the first layer number and the second layer number of the first transmission scheme are determined according to the correspondence between the DMRS port and the layer number.
11. The method according to supplement 10, wherein the first indication field is determined under the condition that the first layer number is known, and the second indication field is determined under the condition that the second layer number is known.
12. The method according to supplement 10 or 11, wherein the bit width of the first indication field is equal to the maximum bit width of the first indication field in the first transmission scheme and the second transmission scheme.
13. The method according to supplement 12, wherein the bit width of the first indication field in the first transmission scheme is less than or equal to the bit width of the first indication field in the second transmission scheme.
14. The method according to supplement 10 or 11, wherein
   the bit width of the second indication field is equal to the maximum bit width of the second indication field in the first transmission scheme and the second transmission scheme; and/or
   the bit width of the second indication field is equal to the bit width of the first indication field.
15. The method according to supplement 10 or 11, wherein the bit width of the second field is equal to the maximum bit width of the second field in the first transmission scheme and the second transmission scheme.
16. The method according to supplement 15, wherein the bit width of the second field in the first transmission scheme is less than or equal to the bit width of the second field in the second transmission scheme.
17. The method according to any one of supplements 2-16, wherein
   the first indication field indicates transmission parameters of a first panel or the first SRS resource set; and/or
   the second indication field indicates transmission parameters of a second panel or the second SRS resource set.
18. The method according to any one of supplements 2-17, wherein
   the first indication field is a first TPMI field or a first SRI field; and/or
   the second indication field is a second TPMI field or a second SRI field;
   the second field is an antenna ports field.
19. The method according to supplement 18, wherein
   in a case where codebook based uplink data is transmitted, the first indication field is the first TPMI field, and/or the second indication field is the second TPMI field; and
   in a case where non-codebook based uplink data is transmitted, the first indication field is the first SRI field, and/or the second indication field is the second SRI field.
20. The method according to supplement 19, wherein
   in a case where codebook-based uplink data is transmitted in the SFN scheme, the layer number and the TPMI are determined according to the first TPMI field; the second TPMI field is reserved or absent; and
   the DMRS port is determined according to the layer number and the antenna ports field.
21. The method according to supplement 20, wherein the downlink control information includes two SRS resource indicator (SRI) fields, in which two SRS resources indicated by the two SRS resource indicator fields have a same number of SRS ports.
22. A method of receiving uplink data, applied to a network device, including:
   transmitting, by the network device, downlink control information,
   receiving, by the network device, uplink data transmitted in a first transmission scheme or a second transmission scheme;
   wherein a terminal equipment determines a layer number and a DMRS port according to the downlink control information, and transmits the uplink data in the first transmission scheme or the second transmission scheme, and wherein the terminal equipment is configured with a first SRS resource set and a second SRS resource set.
23. A terminal equipment, including a memory storing a computer program, and a processor configured to execute the computer program to implement the method according to any one of supplements 1 to 21.
24. A network device, including a memory storing a computer program, and a processor configured to execute the computer program to implement the method according to supplement 22.
25. A communication system, including:
   a network device configured to transmit downlink control information,
   a terminal equipment configured with a first SRS resource set and a second SRS resource set, and to determine a layer number and a DMRS port according to the downlink control information, and transmit uplink data in a first transmission scheme or a second transmission scheme;
   wherein the network device receives the uplink data transmitted in the first transmission scheme or the second transmission scheme.

## Claims

1. An uplink data transmitting device, configured in a terminal equipment, wherein the terminal equipment is configured with a first SRS resource set and a second SRS resource set, the device comprising:
a receiving unit configured to receive downlink control information, and
a transmitting unit configured to determine a layer number and a DMRS port according to the downlink control information, and transmit uplink data in a first transmission scheme or a second transmission scheme.

2. The device according to claim 1, wherein
the first transmission scheme includes a space division multiplexing (SDM) scheme;
the second transmission scheme includes one of a single transmission and reception point (sTRP) scheme, a multiple transmission and reception point (mTRP) sTRP scheme, a frequency division multiplexing (FDM) scheme, or a single-frequency network (SFN) scheme;
the downlink control information includes a first field and a second field, in which the first field includes a first indication field and/or a second indication field.

3. The device according to claim 2, wherein
in a case where the uplink data is transmitted in the first transmission scheme, a first layer number is determined according to the first indication field, and a second layer number is determined according to the second indication field, in which the first layer number and the second layer number are identical or different; and
the DMRS port is determined according to a sum of the first layer number and the second layer number and the second field.

4. The device according to claim 3, wherein
in at least two of the DMRS ports, a first part of the DMRS ports belong to a first CDM group, and a second part of the DMRS ports belong to a second CDM group,
the first layer number or the first SRS resource set is associated with the first CDM group and the DMRS port included therein, and the second layer number or the second SRS resource set is associated with the second CDM group and the DMRS port included therein,
in which the first CDM group is a CDM group to which a first DMRS port in at least two of the DMRS ports belongs.

5. The device according to claim 4, wherein
the first CDM group includes a DMRS port 0, and the second CDM group includes a DMRS port 2 and a DMRS port 3.

6. The device according to claim 2, wherein
in a case where the uplink data is transmitted in the first transmission scheme, a first layer number is determined according to the first indication field, and a second layer number is determined according to the second indication field, in which the first layer number and the second layer number are identical or different; and
the DMRS port is determined according to a correspondence between the first layer number, the second layer number and the DMRS ports,
in which the second field is reserved.

7. The device according to claim 3, wherein
a bit width of the second indication field is equal to a maximum bit width of the second indication field in the first transmission scheme and the second transmission scheme; and
the bit width of the second indication field in the first transmission scheme is greater than or equal to the bit width of the second indication field in the second transmission scheme.

8. The device according to claim 3, wherein
the bit width of the second indication field is equal to the bit width of the first indication field.

9. The device according to claim 2, wherein
in a case where the uplink data is transmitted in the first transmission scheme, the DMRS ports are determined according to the second field; and
the first layer number and the second layer number in the first transmission scheme are determined according to the correspondence between the DMRS ports and the layer numbers.

10. The device according to claim 9, wherein
the first indication field is determined under the condition that the first layer number is known, and the second indication field is determined under the condition that the second layer number is known.

11. The device according to claim 9, wherein
the bit width of the first indication field is equal to the maximum bit width of the first indication field in the first transmission scheme and the second transmission scheme; and
the bit width of the first indication field in the first transmission scheme is less than or equal to the bit width of the first indication field in the second transmission scheme.

12. The device according to claim 9, wherein
the bit width of the second indication field is equal to the maximum bit width of the second indication field in the first transmission scheme and the second transmission scheme; and/or
the bit width of the second indication field is equal to the bit width of the first indication field.

13. The device according to claim 9, wherein
the bit width of the second field is equal to the maximum bit width of the second field in the first transmission scheme and the second transmission scheme.

14. The device according to claim 13, wherein
the bit width of the second field in the first transmission scheme is less than or equal to the bit width of the second field in the second transmission scheme.

15. The device according to claim 2, wherein
the first indication field indicates a transmission parameter of a first panel or the first SRS resource set; and/or
the second indication field indicates a transmission parameter of a second panel or the second SRS resource set.

16. The device according to claim 2, wherein
the first indication field is a first TPMI field or a first SRI field, and/or
the second indication field is a second TPMI field or a second SRI field, and
the second field is an antenna ports field.

17. The device according to claim 16, wherein
in a case where codebook based uplink data is transmitted, the first indication field is the first TPMI field, and/or the second indication field is the second TPMI field; and
in a case where non-codebook based uplink data is transmitted, the first indication field is the first SRI field, and/or the second indication field is the second SRI field.

18. The device according to claim 17, wherein
in a case where codebook-based uplink data is transmitted in the SFN scheme, the layer number and the TPMI are determined according to the first TPMI field; the second TPMI field is reserved or absent; and
the DMRS ports are determined according to the layer number and the antenna ports field.

19. The device according to claim 18, wherein
the downlink control information includes two SRS resource indicator (SRI) fields, in which the two SRS resources indicated by the two SRS resource indicator fields have a same number of SRS ports.

20. An uplink data receiving device, configured in a network device, comprising:
a transmitting unit configured to transmit downlink control information,
a receiving unit configured to receive uplink data transmitted in a first transmission scheme or a second transmission scheme,
wherein a terminal equipment determines a layer number and a DMRS port according to the downlink control information, and transmits the uplink data in the first transmission scheme or the second transmission scheme, and wherein the terminal equipment is configured with a first SRS resource set and a second SRS resource set.
